(19) Europäisches Patentamt / European Patent Office / Office européen des brevets

(11) **EP 3 985 332 B1**

(12) **EUROPEAN PATENT SPECIFICATION**

(45) Date of publication and mention
of the grant of the patent:
**10.05.2023  Bulletin 2023/19**

(21) Application number: **21202431.9**

(22) Date of filing: **13.10.2021**

(51) International Patent Classification (IPC):
**F25B 49/02** $^{(2006.01)}$     **F04D 27/02** $^{(2006.01)}$
**F04D 27/00** $^{(2006.01)}$

(52) Cooperative Patent Classification (CPC):
**F25B 49/025; F04D 27/001; F04D 27/0207;**
**F04D 27/0238; F04D 27/0261;** F05D 2260/601;
F05D 2270/301; F05D 2270/303; F05D 2270/309;
F05D 2270/335; F25B 2600/0251; F25B 2600/0253;
F25B 2600/23; F25B 2700/151; F25B 2700/171;

(Cont.)

(54) **CHILLER SYSTEM AND METHOD OF OPERATING THE SAME**

KÜHLERSYSTEM UND VERFAHREN ZUM BETRIEB DAVON

SYSTÈME DE REFROIDISSEUR ET SON PROCÉDÉ DE FONCTIONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **16.10.2020   KR 20200134402**

(43) Date of publication of application:
**20.04.2022   Bulletin 2022/16**

(73) Proprietor: **LG Electronics Inc.
SEOUL 07336 (KR)**

(72) Inventors:
• **KIM, Sanghyun**
**Seoul (KR)**
• **KIM, Youngjin**
**Seoul (KR)**
• **HWANG, Jongcheol**
**Seoul (KR)**
• **KO, Kwangsuk**
**Seoul (KR)**

(74) Representative: **Vossius & Partner
Patentanwälte Rechtsanwälte mbB
Siebertstraße 3
81675 München (DE)**

(56) References cited:
**US-A- 4 581 900     US-A- 5 971 712
US-B2- 8 567 207**

(52) Cooperative Patent Classification (CPC): (Cont.)
F25B 2700/1931; F25B 2700/1933;
F25B 2700/21151; F25B 2700/21152; Y02B 30/70

**Description**

## BACKGROUND OF THE INVENTION

### 1. Field of the invention

The present disclosure relates to a chiller system and a method of operating the same, and more particularly to a chiller system capable of preventing surge and operating stably, and a method of operating the same.

### 2. Description of the Related Art

An air conditioner is a device for discharging cool or hot air into a room to create a comfortable indoor environment. The air conditioner is installed to provide a more comfortable indoor environment for users by controlling indoor temperature and purifying indoor air. Generally, the air conditioner includes an indoor unit installed indoors and including a heat exchanger, and an outdoor unit including a compressor, a heat exchanger, etc., and configured to supply a refrigerant to the indoor unit. Meanwhile, in the air conditioner, a chiller used in a large workplace or building generally includes: a cooling tower installed outdoors on a rooftop, and a heat exchange unit configured to perform heat exchange between coolant, supplied from the cooling tower, with a circulating refrigerant. Further, the heat exchange unit may include a compressor, a condenser, and an evaporator.

As disclosed in Korean Registered Patent Publication No. 10-1084477 (related art 1), the chiller supplies chilled water to demand sources of chilled water, and provides cooling by heat exchange between a refrigerant, circulating through a refrigeration system, and chilled water circulating between the demand sources and the refrigeration system. As large-capacity cooling equipment, the chiller may be installed in large buildings and the like. As large-capacity equipment, the chiller requires high costs for maintenance and repair. Generally, maintenance of the chiller is carried out at a predetermined cycle regardless of a state of the chiller, thereby incurring unnecessary maintenance costs. Further, a failure occurring in the chiller may cause high repair costs, and as the chiller may not be operated due to the failure, an additional loss may be incurred. Accordingly, there is a need for a method of effectively monitoring and managing the chiller.

Meanwhile, the chiller system has a problem in that surge occurs in the compressor that operates by rotation movement. The surge occurs due to a high compression ratio with respect to a refrigerant flow amount, causing an irregular and unstable state of a refrigerant flow due to idling of a rotor of the compressor. When the surge occurs, the compressor may not produce pressure higher than system pressure resistance, such that the refrigerant repeatedly flows backward, and the compressor may be damaged frequently. Accordingly, there is a need for a method of preventing damage to the compressor which is caused due to surge occurring the chiller system. Further, when a control operation is performed to remove the surge after the surge occurs in the compressor, there is a problem in that the compressor is already damaged.

US 4 581 900 A relates to a method and apparatus for detecting surge in a compressor of a compressor-driven system. US 5 971 712 A relates to a method for electronically detecting the occurrence of surge in a centrifugal compressor driven by an electric motor, based on the measured rates of change of the discharge pressure and motor current.

## SUMMARY OF THE INVENTION

The invention is defined by independent claim 1. Further embodiments of the invention are defined by the dependent claims. It is an object of the present disclosure to provide a chiller system capable of preventing the occurrence of surge and failure, and a method of operating the same. It is another object of the present disclosure to provide a chiller system capable of effectively predicting the occurrence of surge, and a method of operating the same. It is yet another object of the present disclosure to provide a chiller system capable of accurately detecting the occurrence of surge using machine learning, and a method of operating the same. It is still another object of the present disclosure to provide a chiller system and a method of operating the same, in which by updating a compressor map of a device when surge occurs therein, the compressor map may be optimized for each device. It is still another object of the present disclosure to provide a chiller system capable of improving the efficiency by providing optimal operation control, and a method of operating the same.

In order to achieve the above or other objects, the present disclosure provides a chiller system and a method of operating the same, in which by predicting and detecting surge using machine learning, the occurrence of surge may be prevented effectively.

In accordance with an aspect of the present disclosure, the above and other objects can be accomplished by providing a chiller system, including: a compressor configured to compress a refrigerant by rotation; a condenser configured to condense the refrigerant compressed by the compressor; an expander configured to expand the condensed refrigerant; an evaporator configured to evaporate the expanded refrigerant; a sensor unit including a plurality of temperature sensors, a speed sensor for sensing a rotational speed of the compressor, and a current sensor for sensing a current of the compressor; and a controller configured to determine whether to enter into a surge detection logic based on a volatility of data sensed by the sensor unit, and configured to perform surge detection.

In accordance with an aspect of the present disclosure, the above and other objects can be accomplished by providing a chiller system, including: a compressor configured to compress a refrigerant by rotation; a condenser configured to condense the refrigerant compressed by the compressor; an expander configured to expand the condensed refrigerant; an evaporator configured to evaporate the expanded refrigerant; a sensor unit including a plurality of temperature sensors, a speed sensor for sensing a rotational speed of the compressor, and a current sensor for sensing a current of the compressor; and a controller configured to determine whether to enter into a surge detection logic based on a volatility of data sensed by the sensor unit, and configured to perform surge detection based on machine learning.

According to the invention, in response to a rotational speed volatility and a current volatility of the compressor and a volatility of one or more of temperature values sensed by the plurality of temperature sensors falling within reference ranges set for the respective values, the controller may enter into the surge detection logic.

Meanwhile, when the surge occurs, the controller may perform a surge avoidance logic for changing a flow amount of the refrigerant, flowing into the compressor, or the rotational speed of the compressor.

Meanwhile, the controller may predict and detect occurrence of surge using pre-trained artificial intelligence (AI); upon predicting or detecting the occurrence of surge, may perform the surge avoidance logic; and based on a pressure ratio volatility and the current volatility of the compressor, may determine whether to terminate the surge avoidance logic.

Meanwhile, the controller may include: a surge detection logic entry condition setter configured to select factors required for surge detection logic entry conditions; a surge detection processor configured to extract a factor appropriate for a surge prediction and detection model and including artificial intelligence (AI) trained using the extracted factor; a surge avoidance controller configured to perform a surge avoidance operation upon detecting the surge; a normal state entry unit configured to determine whether to terminate the surge avoidance operation after recovery from the surge; and an error message output unit configured to output an error message corresponding to the occurrence of surge.

Meanwhile, the chiller system may further include an inlet control valve configured to control the flow amount of the refrigerant flowing into the compressor, wherein upon detecting the surge, in response to a target temperature at a cool water outlet being greater than a current temperature at the cool water outlet, the controller may adjust the inlet control valve to 100 %, and in response to the target temperature at the cool water outlet being lower than the current temperature at the cool water outlet, the controller may fix the inlet control valve and may increase the rotational speed of the compressor.

Meanwhile, when failing to complete the surge avoidance operation during a predetermined period of time, the controller may fix the inlet controller valve and may stop the compressor.

In addition, the chiller system may further include a hot gas bypass (HGBP) valve for bypassing a high-temperature and high-pressure refrigerant, discharged from the compressor, to an inlet side of the compressor, wherein upon the surge, the controller may operate the HGBP valve.

Meanwhile, the chiller system au further include an ejector configured to discharge a mixed refrigerant containing a mixture of a portion of the refrigerant, discharged from the compressor, and a portion of the refrigerant discharged from the evaporator, and including a first inlet, through which a portion of the refrigerant discharged from the compressor is introduced, and a second inlet, through which a portion of the refrigerant discharged from the evaporator is introduced, wherein the inlet control valve may be disposed in a pipe connected to the first inlet and may control a flow amount of the refrigerant flowing into the first inlet.

Further, in response to the pressure ratio volatility and current volatility of the compressor being within a predetermined range, the controller may enter into a flexible operation for gradually increasing revolutions of the compressor; and in response to the pressure ratio volatility and current volatility of the compressor not being within the predetermined range, the controller may fix the inlet control valve and may stop the compressor.

Meanwhile, in response to the rotational speed volatility and current volatility of the compressor and the volatility of temperature values sensed by the plurality of temperature sensors not falling within reference ranges set for the respective values until a predetermined period of time elapses, the controller may enter into the surge control logic.

Meanwhile, the chiller system may further include a storage for storing a compressor map including a surge line separating a surge region, in which the surge occurs, and a normal region.

Further, when the surge occurs, the controller may calculate an operating point, corresponding to a point where the surge occurs, in a 2D coordinate system of the rotational speed and pressure ratio of the compressor, and may perform the surge avoidance logic so that the calculated operating point may be moved out of the surge region.

In addition, when the surge occurs, the controller may calculate an operating point, corresponding to a point where the surge occurs, in a 2D coordinate system of the rotational speed and pressure ratio of the compressor, and may update the compressor map based on the calculated operating point.

Moreover, the controller may divide the surge line into a plurality of sections based on the rotational speed of the compressor, wherein when the surge occurs, the controller may calculate an operating point, corresponding to a point where the surge occurs, in a 2D coordinate system of the rotational speed and pressure ratio of the compressor, and may update a section including the operating point among the plurality of sections.

In addition, the controller may calculate a pressure ratio to be updated, by adding a correction value, set for a rotational speed section in which the surge occurs, to the pressure ratio at which the surge occurs.

In accordance with another aspect of the present disclosure, the above and other objects can be accomplished by providing a method for operating a chiller system, the method including: in response to a rotational speed volatility and a current volatility of a compressor and a volatility of temperature data sensed at one or more points falling within reference ranges set for the respective values, determining whether to enter into a surge detection logic; upon entering into the surge detection logic, performing surge detection; and upon detecting surge, performing a surge avoidance operation.

Meanwhile, the performing of the surge avoidance operation may include: in response to the pressure ratio volatility and current volatility of the compressor being within a predetermined range, entering into a flexible operation for gradually increasing revolutions of the compressor; and in response to the pressure ratio volatility and current volatility of the compressor not being within the predetermined range, fixing the inlet control valve and stopping the compressor.

The method of operating the chiller system may further include, upon detecting the surge, updating a compressor map including a surge line separating a surge region, in which the surge occurs, and a normal region.

Further, the surge line may be divided into a plurality of sections based on the rotational speed of the compressor, wherein the updating of the compressor map may include calculating an operating point, corresponding to a point where the surge occurs, in a 2D coordinate system of the rotational speed and pressure ratio of the compressor, and updating a section including the operating point among the plurality of sections.

In addition, the performing of the surge detection may include detecting the surge based on machine learning.

## EFFECTS OF THE INVENTION

According to at least one of the embodiments of the present invention, product reliability may be improved by preventing the occurrence of surge and failure.

Further, according to at least one of the embodiments of the present invention, by effectively predicting and preventing the occurrence of surge, a product service life may be extended and component replacement costs may be reduced.

In addition, according to at least one of the embodiments of the present invention, the occurrence of surge may be detected accurately based on machine learning.

Moreover, according to at least one of the embodiments of the present invention, by updating a compressor map of a device when surge occurs therein, the compressor map may be optimized for each device.

In addition, according to at least one of the embodiments of the present invention, efficiency may be improved based on optimal operation control.

The effects of the present invention are not limited to the aforesaid, and other effects not described herein will be clearly understood by those skilled in the art from the following description of the appended claims.

## BRIEF DESCRIPTION OF THE DRAWINGS

FIG. 1 is a diagram illustrating a configuration of a chiller network system according to an embodiment of the present invention.

FIG. 2 is a diagram illustrating a configuration of a chiller system according to an embodiment of the present invention,

FIG. 3 is a diagram illustrating a configuration of a chiller system according to an embodiment of the present invention.

FIG. 4 is a diagram referred to in the description of a surge controller of a chiller system according to an embodiment of the present invention.

FIG. 5 is an internal block diagram schematically illustrating a server according to an embodiment of the present invention.

FIG. 6 is a flowchart illustrating a method of operating a chiller system according to an embodiment of the present invention.

FIG. 7 is a diagram referred to in the description of setting surge detection logic entry conditions according to an embodiment of the present invention.

FIG. 8 is a flowchart illustrating a method of operating a chiller system according to an embodiment of the present invention.

FIGS. 9 and 10 are diagrams referred to in the description of surge detection based on machine learning according to an embodiment of the present invention.

FIG. 11 is a flowchart illustrating an operating method of a chiller system according to an embodiment of the present invention.

FIGS. 12 to 14 are diagrams referred to in the description of surge control according to an embodiment of the present invention.

FIGS. 15 and 16 are diagrams referred to in the description of updating a compressor map according to an embodiment of the present invention.

FIG. 17 is a schematic diagram illustrating a chiller according to an embodiment of the present invention.

FIG. 18 is a schematic diagram illustrating an internal structure of an ejector of FIG. 17.

## DETAILED DESCRIPTION OF THE PREFERRED EMBODIMENTS

Reference will now be made in detail to embodiments, examples of which are illustrated in the accompanying drawings. However, the present disclosure may be embodied in many different forms and should not be construed as limited to the embodiments set forth herein.

Meanwhile, terms "module" and "unit" to refer to elements used in the following description are given merely to facilitate explanation of the description, without including any significant meaning or role by itself. Therefore, the "module" and the "unit" may be used interchangeably.

Further, it should be understood that the terms "comprise", 'include", "have", etc. when used in this specification, specify the presence of stated features, numbers, steps, operations, elements, components, or combinations thereof, but do not preclude the presence or addition of one or more other features, numbers, steps, operations, elements, components, or combinations thereof.

In addition, it will be understood that, although the terms first, second, etc., may be used herein to describe various elements, these elements should not be limited by these terms. These terms are only used to distinguish one element from another.

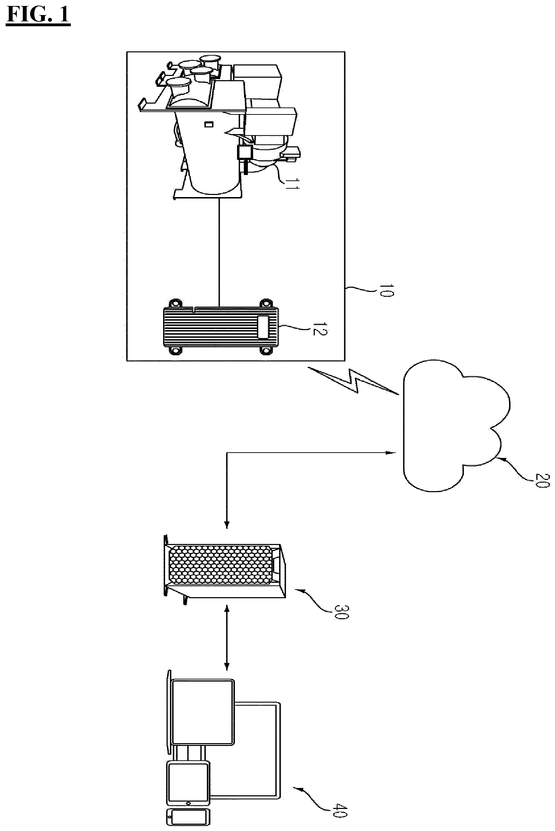

FIG. 1 is a diagram illustrating a configuration of a chiller network system according to an embodiment of the present invention.

Referring to FIG. 1, the chiller network system according to an embodiment of the present disclosure may include one or more chiller systems 10 and a server 30. Preferably, the chiller network system according to an embodiment of the present invention may include a plurality of chiller systems 10, and the server 30 for managing and controlling the plurality of chiller systems 10.

The chiller system 10 may include a chiller 11, and a communication module 12 connected to the chiller 11 for communication with the server 30. In some embodiments, the communication module 12 may be embedded in the chiller 11.

The chiller system 10 may access the Internet via the communication module 12 and a network 20, and may transmit and receive data with the server 30. For example, the communication module 12 may transmit sensing data associated with the chiller 11, which are obtained from a plurality of sensors, to the server 30 and may transfer data, received from the server 30, to the chiller 11.

The server 30 may be a server operated by a manufacturer of the chiller 11, or a server operated by a company entrusted by the manufacturer with the task of providing services, or may be a cloud server.

The server 30 may remotely monitor status of the plurality of chillers 11, and may control operations by determining abnormalities thereof.

The plurality of chiller systems 10 and the server 30, which include a communication means (not shown) that supports one or more communication standards, may communicate with each other. Further, the plurality of chiller systems 10 and the server 30 may communicate with a monitoring terminal 40 including a PC, a mobile terminal, etc., and another external server.

Users, such as managers, customers, etc., may check information on the chillers 11 in the chiller network system through the monitoring terminal 40, such as a mobile terminal, a PC, and the like.

The server 30 may be implemented as the cloud server 30, and may be connected to the chiller 11 to monitor and control the chiller 11 and to remotely provide various solutions.

Meanwhile, the server 30 may be implemented as a plurality of servers so that information and functions may be distributed to the plurality of servers, or may be implemented as a single integrated server.

Meanwhile, the server 30 may provide the monitoring terminal 40 with information on control of the chiller 11 or a current state of the chiller 11 and the like, and may create and distribute an application for controlling and state monitoring of the chiller 11.

The application may be an application for PCs or smartphones used as the monitoring terminal 40.

The server 30 is connected to the plurality of chiller systems 10 to monitor and control the operations thereof.

In this case, the server 30 may perform operation setting, lock setting, schedule control, group control, abnormality checking, and the like.

Particularly, the server 30 may receive data from the plurality of chiller systems 10 through wireless communication, and may analyze the data to check whether an abnormality occurs in the respective chillers 11.

Meanwhile, the server 30 may authenticate the communication module 12 and a user terminal 40 and may transmit and receive data and verify data packet integrity for transmitted and received data packets.

The server 30 may receive data based on operating information of the chiller 11 from the communication module 12.

The communication module 12 may receive the operating information of the chiller 11 through wired communication, and may transmit data based on the operating information of the chiller 11 to the server 30.

The chiller 11 may include: an air conditioning unit including a refrigeration cycle; a cooling tower supplying coolant into the air conditioning unit; and a cold-water demand source in which cold water, heat-exchanged with the air conditioning unit, circulates.

The cold-water demand source may be understood as a device or a space in which air-conditioning is performed using cold water. For example, the cold-water demand source may include at least one of the following: an air handling unit (AHU) configured to mix indoor air with outside air, and then to perform heat exchange between the mixed air and cold water to cause the air to flow into a room; a fan coil unit (FCU) installed inside a room and configured to perform heat exchange between the indoor air with cold water and to discharge the air into the room; and a floor pipe unit buried in the floor of a room.

Main components of the air-conditioning unit may include a compressor for compressing a refrigerant, a condenser in which a high-temperature and high-pressure refrigerant compressed by the compressor is introduced, an expander for decompressing the refrigerant condensed by the condenser, and an evaporator for evaporating the refrigerant decompressed by the expander.

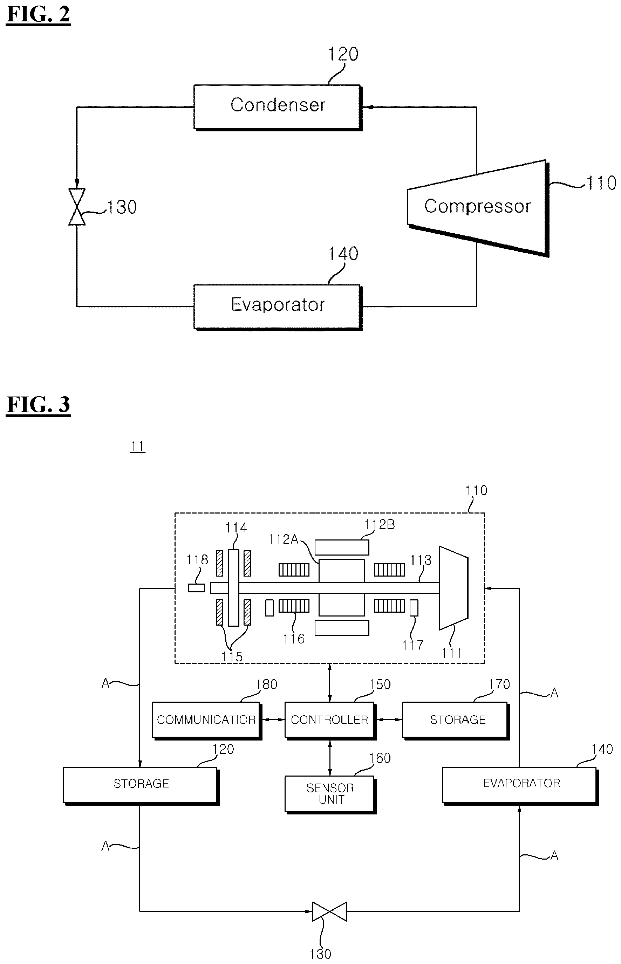

FIG. 2 is a diagram illustrating a configuration of a chiller system according to an embodiment of the present invention.

Referring to FIG. 2, main components of the chiller 11 may include a compressor 110, a condenser 120, an expander 130, and an evaporator 140.

The compressor 110 is a device for compressing gases, such as air, refrigerant gas, etc., and may compress a refrigerant and supply the compressed refrigerant to the condenser 120. The compressor 110 may include an impeller for compressing the refrigerant, a rotating shaft coupled to the impeller, and a motor for rotating the rotating shaft.

The condenser 120 may cool the refrigerant by heat exchange between coolant and a high-temperature and high-pressure refrigerant discharged from the compressor 110 and passing through the condenser 120.

The expander 130 discharges a liquid refrigerant into the evaporator 140, and converts the high-pressure refrigerant into a low-temperature and low-pressure refrigerant by passing through an expansion valve. The expander 130 may expand the refrigerant including passed through the condenser 120.

The evaporator 140 evaporates the refrigerant to cool the cold water. The evaporator 140 may be connected to the demand source to circulate the cold water.

FIG. 3 is a diagram illustrating a configuration of a chiller system according to an embodiment of the present invention. In FIG. 3, main components are the same as those of FIG. 2, except that an internal configuration of the compressor 110 and a controller 150 are further illustrated in addition to the embodiment of FIG. 2.

Referring to FIG. 3, main components of the chiller 11 may include the compressor 110, the condenser 120, the expander 130, the evaporator 140, and a control device 50. Further, the chiller 11 may have a refrigerant passage A.

The compressor 110 is a device for compressing gases, such as air, refrigerant gas, etc., and may compress a refrigerant and supply the compressed refrigerant to the condenser 120. The compressor 110 may include an impeller 111 for compressing the refrigerant, a rotating shaft 113 coupled to the impeller 111, and motors 112A and 112B for rotating the rotating shaft 113.

Further, the compressor 110 may include a thrust blade 114 disposed perpendicular to the rotating shaft 113, a thrust bearing 115 supporting the thrust blade 114 in an axial direction, a journal bearing 116 supporting the rotating shaft 113, gap sensors 117 and 118, and the like.

The refrigerant channel A includes: a channel through which the refrigerant compressed by the compressor 110 flows from the compressor 110 to the condenser 120; a channel through which the refrigerant condensed by the condenser 120 flows from the condenser 120 to the expander 130; a channel through which the refrigerant expanded by the expander 130 flows from the expander 130 to the evaporator 140; and a channel through which the refrigerant evaporated by the evaporator 140 flows from the evaporator 140 to the compressor 110.

The gap sensors 117 and 118 are sensors for sensing positions of the rotating shaft 113 and the thrust blade 114. Based on position information measured by the gap sensors 117 and 118, the control device 50 may control the current of the thrust bearing 115 and the journal bearing 116, to control the position of the rotating shaft 113.

In order to control the position of the rotating shaft 113, there may be generally one or more thrust bearings 115 and two or more journal bearings 116.

The chiller 11 may further include a controller 150. The controller 150 may control the overall operation of the chiller 11, such as the compressor 110, the condenser 120, the expander 130, the evaporator 140, and the like.

The chiller 11 may further include a communicator 180. The communicator 180 may include one or more communication modules to communicate with other devices through wired or wireless communication. For example, the communicator 180 may include the communication module 12 illustrated in FIG. 1. Alternatively, the communicator 180 may include other types of wired and/or wireless communication modules which are different from the communication module 12, to communicate with an external device.

The controller 150 may transmit state information of the chiller 11 to other devices, such as the server 30, through the communicator 180. In addition, the controller 150 may control the chiller 11 based on a control signal and a variety of data which are received from other devices such as the server 30 and the like.

Meanwhile, the controller 150 may control conversion of a refrigerant state in the compressor 110, the condenser 120, and the evaporator 140.

Further, in order to prevent and avoid surge, the controller 150 may control a flow amount of the refrigerant flowing into the compressor 110. In addition, the controller 150 may control the rotational speed of the compressor 110 in order to prevent and avoid surge.

Meanwhile, the chiller 11 may include a sensor unit 160 including a plurality of sensors. The sensor unit 160 may include a plurality of temperature sensors, a speed sensor for sensing the rotational speed of the compressor, and a current sensor for sensing the current of the compressor.

The sensor unit 160 may include a plurality of sensors for sensing temperature and pressure of the refrigerant. For example, the plurality of sensors may be disposed on an inlet side and an outlet side of the main components of the air conditioning unit to sense temperature, pressure, and the like. In some embodiments, the sensor unit 160 may further include other types of sensors. For example, the chiller 11 may include a vibration sensor, a humidity sensor, and the like.

The sensor unit 160 may include a plurality of sensors, and may transmit data sensed by the sensors to the controller 150. For example, the sensor unit 160 may include a plurality of sensors for sensing temperature and pressure of the refrigerant, a speed sensor for sensing the rotational speed of the compressor 110, and a current sensor for sensing the current of the compressor 110.

In some embodiments, an Internet of Things (IoT) sensor may be disposed in the chiller 11 and/or in a space in which the chiller 11 is disposed, for sensing data associated with a state of the chiller 11. In addition, the IoT sensor may transmit the sensed data to the chiller 11 and/or the communication module 12. For example, the IoT sensor may sense the temperature and humidity of the space in which the chiller 11 is disposed, and may transmit the sensed data to the chiller 11 and/or the communication module 12.

The chiller 11 may include a storage 170 for storing data required for the operation and control of the chiller 11. The storage 170 may store data measured by the sensor unit 160 and data for the operation and control of the chiller 11. For example, the storage 170 may store a compressor map including a surge line separating a surge region, in which surge occurs, and a normal region.

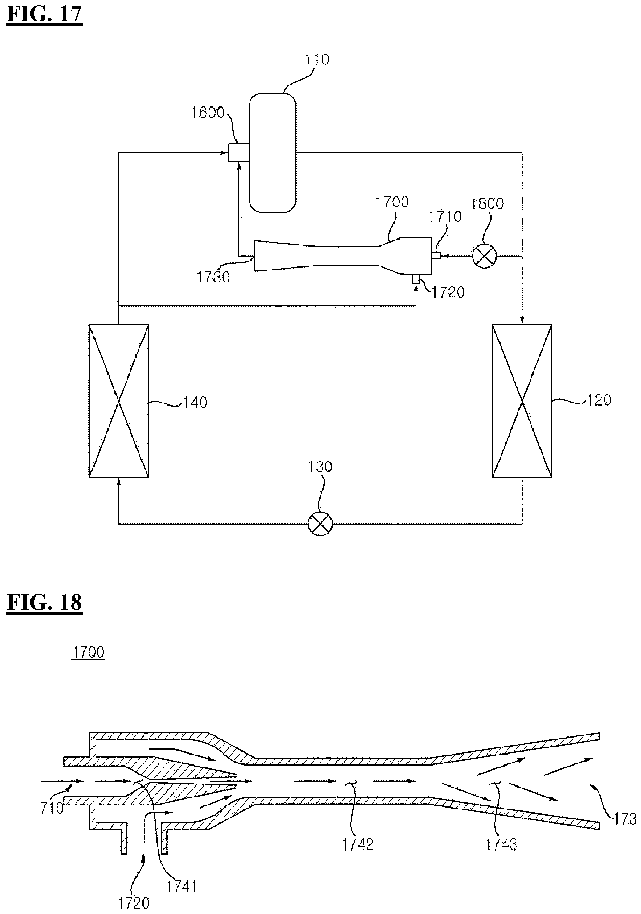

Further, the storage 170 may store setting data of the surge region associated with the occurrence of surge, and reference data for controlling opening and closing of an inlet control device for controlling a flow amount of the refrigerant flowing into the compressor 110, a Hot Gas Bypass (HGBP) valve for bypassing the high-temperature and high-pressure refrigerant discharged from the compressor 110 to an outlet side of the compressor 110, and the like. For example, the inlet control device may be a valve which is controlled to open and close according to a refrigerant amount, an Inlet Guide Vane (IGV), and the like. In some embodiments, the inlet control valve may be a Discharge Gas Recirculation (DGR). The DGR may resupply a high-pressure gas discharged from the compressor 110 to the outlet side of the compressor 110. The DGR and improvement in the efficiency of the DGR will be described later with reference to FIGS. 17 and 18.

Among failures occurring in the chiller 11, a failure due to damage of the compressor 110 is a crucial problem in terms of product performance of the chiller 11, and in order to provide a stable operation, it is required to prevent the failure of the compressor 110 and enable an optimal operation thereof.

The chillers 11 are not controlled one by one but in units of buildings, such that the chillers 11 are sensitive to a load variation inside a building. When a load changes abruptly, the compressor 110 may be damaged, causing a failure thereof. Particularly, when an abnormality occurs in the chiller 11, surge may occur, causing the refrigerant inside the chiller 11 to flow backward to the compressor 110.

Based on the setting data of the surge region in the storage 170, the controller 150 may control an opening degree of the inlet control valve, the IGV, or the HGBP valve. In addition, based on the setting data of the surge region in the storage 170, the controller 150 may control the operation and rotational speed of the compressor 110. Accordingly, by controlling a pressure ratio of the compressor 110, the controller 150 may prevent the occurrence of the surge or may avoid the surge.

If a surge (abnormal) phenomenon occurs continuously in the chiller system using a high voltage/current, components may be damaged to an extent that makes the system inoperable.

The surge phenomenon in the chiller may occur in all load areas, but in a low load area, it is very difficult to control surge detection and avoidance. Surge in the low load area occurs frequently in the case where a chiller refrigeration capacity is larger than refrigeration performance required in practice. Accordingly, it is important to predict/detect surge in the low load area.

According to an embodiment of the present invention, the controller 150 determines whether to enter into a surge detection logic based on a volatility of data sensed by the sensor unit 160. Accordingly, surge may be detected while the chiller 11 is in a stable state, thereby detecting the surge more accurately.

For example, if a rotational speed volatility and a current volatility of the compressor 110, and a volatility of one or more temperature values sensed by the plurality of temperature sensors fall within reference ranges set for the respective values, the controller 150 may determine to enter into the surge detection logic.

The rotational speed volatility and current volatility of the compressor 110, and the volatility of one or more temperature values sensed by the plurality of temperature sensors may be set based on data during a normal operation of the chiller 11.

Meanwhile, if the rotational speed volatility and current volatility of the compressor 110, and the volatility of one or more temperature values sensed by the plurality of temperature sensors do not fall within the respective reference ranges until a predetermined period of time elapses, the controller 150 may determine to enter into the surge detection logic. Accuracy of surge detection may be improved when surge is detected while the chiller 11 is in a stable state, but if the occurrence of surge is not detected continuously because the chiller 11 fails to reach a stable state, product stability may be degraded. Accordingly, when a product is not in a stable state even after a sufficient period of time has elapsed to stabilize the product, the controller 150 may monitor the occurrence of surge to detect an abnormal state.

In the existing method, by comparing a specific factor (e.g., sensed current or vibration data) with a predetermined threshold value, an operating state of the chiller 11 is determined, and the occurrence of surge is determined. According to an embodiment of the present disclosure, by monitoring a change in sensing data for a plurality of factors, rather than merely using a threshold value, it is possible to determine more accurately whether a system is stabilized, and/or whether surge occurs. Accordingly, it is possible to accurately determine whether the chiller 11 is in a stable state, such that surge may be detected by considering the state of the chiller 11, thereby detecting the surge more accurately.

The chiller system 10 according to an embodiment of the present disclosure controls a flexible operation for gradually increasing the RPM of the compressor 110, and then upon entering a normal operating area, the chiller system 10 detects surge. The chiller system 10 detects surge when both electric/cycle stabilities of the chiller are satisfied, thereby determining whether the product is stable. However, even when failing to reach a stable state, the chiller system 10 enters into a surge detection mode after a predetermined period of time elapses, to detect an abnormal state and surge.

Further, according to an embodiment of the present invention, the controller 150 may detect surge based on machine learning. The chiller system 10 according to an embodiment of the present disclosure may detect surge in real time based on trained artificial intelligence and may control surge avoidance according to operating conditions.

For example, according to an embodiment of the present invention, the controller 150 may implement an optimal model for surge detection using Support Vector Machine (SVM), and may predict or detect the occurrence of surge based on artificial intelligence (AI) trained using Support Vector Machine (SVM).

In addition, according to an embodiment of the present invention, the controller 150 may perform optimal surge avoidance by using operating information during the surge detection.

According to an embodiment of the present invention, the controller 150 may receive in real time factors (physical and electrical factors) effective for surge detection logic entry conditions in a refrigeration and air conditioning system, and may check whether the system enters into a stable state.

By considering physical and electrical characteristics, the controller 150 may extract possible factors affecting the occurrence of surge. In this case, by applying one or more factor selection algorithms among PCA, mRMR, Wrapper methods, and F1 score to a list of selected possible factors, the controller 150 may select possible factors that significantly affect the occurrence of surge.

Upon analyzing the effects of the selected physical and electrical factors, the controller 150 may extract some factors as final factors. For example, the controller 150 may extract final factors by analyzing physical/electrical characteristics while reducing the rotational speed of the compressor until surge occurs, by analyzing physical/electrical characteristics while reducing an opening degree of the inlet control device, and by analyzing physical/electrical characteristics while increasing a cool water inlet temperature.

As described above, the server 30 or the chiller system 10 may evaluate product stability based on a volatility of the selected final factors, and may start to control surge detection.

In the chiller 11, a water temperature change is directly related to a pressure change, such that a temperature condition is important for evaluation of product stability. For example, product stability is required to satisfy a first condition that a variation from a set target temperature at a cool water outlet falls within a range of $\pm 0.3$ degrees, and a second condition that a variation from a cool water outlet temperature set by a user falls within a range of $\pm 0.3$ degrees. Further, the conditions are normal state entry conditions, such that the product stability is required to satisfy a third condition that a volatility in the inlet control device, such as IGV and the like, and a volatility of the compressor rotational speed (VFD) fall within 2 % of the entire region.

Once the first to third conditions are satisfied, the controller 150 may determine that the product is stabilized and enters into a normal state, and may detect surge.

If the chiller is affected by an external environment or if a refrigeration capacity is insufficient, the chiller may not enter into a normal state even after the operation. In this case, after a predetermined period of time elapses, the controller 150 may automatically perform a surge detection operation.

According to an embodiment of the present invention, the controller 150 may predict and detect the occurrence of surge using pre-trained AI.

A surge detection logic may be useful for rapid and accurate construction of data used in a map learning model, by automatic labelling of the data using machine learning, and may contribute to improvement in accuracy of a final estimation model by accurate labelling of training data.

By analyzing physical/electrical signals based on the occurrence of surge in the chiller, the controller 150 may select a factor for classifying the occurrence of surge in the chiller, and by learning using data of the corresponding factors, the controller 150 may implement a system for surge detection and prediction.

The server 30 or the chiller system 10 may preprocess data by performing Min-max normalization, so that the data may be used as compatible data for each product. In this case, if the data fall outside a data range, the server 30 or the chiller system 10 may adjust a range of the automatically received data within an upper/lower limit range of existing training data. Further, by fine tuning hyperparameters of deep learning, the server 30 or the chiller system 10 may secure optimal estimation performance, and may use the optimized model and the preprocessed data as training data. For example, the server 30 or the chiller system 10 may detect whether surge occurs by using real-time chiller operation data based on Support Vector Machine (SVM).

Meanwhile, when the surge occurs, the controller 150 may perform a surge avoidance logic for changing a flow amount of the refrigerant flowing into the compressor 110 or the rotational speed of the compressor 110. In some cases, the controller 150 may perform the surge avoidance logic for changing the flow amount of the refrigerant flowing into the compressor 110 and the rotational speed of the compressor 110.

The chiller system 10 according to an embodiment of the present invention may further include an inlet control device for controlling a flow amount of the refrigerant flowing into the compressor 110. The inlet control device may be the inlet control valve (not shown) or the IGV (not shown), including an opening degree which is controlled according to a refrigerant amount.

The chiller system 10 according to an embodiment of the present invention may further include a hot gas bypass (HGBP, not shown) valve for bypassing the high-temperature and high-pressure refrigerant, discharged from the compressor 110, to the inlet side of the compressor 110. For example, the HGBP valve may be disposed in a pipe connecting an outlet pipe and an inlet pipe of the compressor 110. The HGBP valve may bypass the refrigerant, discharged from the compressor 110 and including passed through an oil recovery tube, to the inlet side of the compressor 110. In this case, an accumulator may be further connected to the compressor 110, and the HGBP valve may be connected to an inlet side of the accumulator.

When surge occurs, the controller 150 compares operating conditions, and may open the inlet control device, such as the inlet control valve, IGV, etc., or the HGBP valve, so as to control the chiller 11 to enter a stable operating area.

According to an embodiment of the present invention, when surge occurs, the controller 150 may calculate an operating point, corresponding to a point where the surge occurs, in a 2D coordinate system of the rotational speed and pressure ratio of the compressor 110, and may perform a surge avoidance logic so that the calculated operating point may be moved out of the surge region.

According to an embodiment of the present invention, the surge avoidance logic may be designed based on a temperature deviation of discharged water. For example, if a temperature deviation (target temperature at the cool water outlet - current temperature at the cool water outlet) is greater than zero, the controller 150 may adjust an opening degree of the inlet control valve to 100 % to increase a flow amount. Further, if the temperature deviation is less than zero, the controller 150 may fix the inlet control valve, and then may increase the compressor rotational speed (VFD) to adjust a compression ratio. In addition, if a surge avoidance operation is not complete during a predetermined period of time, the controller 150 may stop the compressor 110 while fixing the inlet control valve.

Upon detecting the surge, if the target temperature at the cool water outlet is greater than the current temperature at the cool water outlet, the controller 150 may avoid the surge by adjusting an opening degree of the inlet control valve to 100 % to increase a flow amount.

Upon detecting the surge, if the target temperature at the cool water outlet is less than the current temperature at the cool water outlet, the controller 150 may avoid the surge by fixing the inlet control device, such as the inlet control valve and the like, and by increasing the rotational speed of the compressor 110 to adjust the compression ratio.

**[0118]** If the target temperature at the cool water outlet is equal to the current temperature at the cool water outlet, the controller 150 may maintain a current state, and then if there is a temperature difference, the controller 150 may perform a corresponding control operation.

**[0119]** Meanwhile, upon detecting the surge, the controller 150 may avoid the surge by operating the HGBP valve. When the HGBP valve is open, the high-temperature and high-pressure gaseous refrigerant, discharged from the compressor 110, is partially bypassed to the inlet side of the compressor 110, such that the pressure of the gaseous refrigerant discharged from the compressor 110 decreases, and the pressure of the refrigerant drawn into the compressor 110 increases. When the compressor 110 operates under a low load at a high pressure ratio, surge occurs in the compressor 110. By opening the HGBP valve when the pressure ratio of the compressor 110 increases, outlet pressure decreases and inlet pressure increases, such that the pressure ratio is reduced, and the occurrence of surge may be prevented.

**[0120]** Meanwhile, if the surge avoidance operation is not complete during a predetermined period of time, the controller 150 may fix a state of the inlet control device, such as the inlet control valve and the like, and may stop the compressor 110. When failing to avoid the surge even after performing the surge avoidance operation during a predetermined period of time, the controller 150 may stop the compressor 110 in order to prevent greater damage.

**[0121]** The controller 150 may control an output device (not shown), such as a display, to output an error state when the surge occurs.

**[0122]** According to an embodiment of the present invention, as a condition for terminating the surge avoidance operation, a pressure ratio volatility and a current volatility in an interval in which the surge avoidance operation is performed may be used. For example, as the condition for terminating the surge avoidance operation, the controller 150 may set a condition that the pressure ratio volatility and current volatility are within 2 % in the interval in which the surge avoidance operation is performed.

**[0123]** After performing the surge avoidance operation, if the pressure ratio volatility and current volatility of the compressor 110 are within a predetermined range, the controller 150 may enter into a flexible operation for gradually increasing revolutions of the compressor 110. After performing the surge avoidance operation, if the pressure ratio volatility and current volatility of the compressor 110 are within a range corresponding to a safe operating area, the controller 150 may terminate the surge avoidance operation, and may sequentially proceed to the flexible operation and then the normal operation. For example, if the condition that the pressure ratio volatility and current volatility are within 2% is satisfied, the controller 150 may enter the flexible operation mode for operating gradually until a target temperature is reached, and then may change to the normal operation (reperforming surge detection).

**[0124]** After performing the surge avoidance operation, if the pressure ratio volatility and current volatility of the compressor 110 are not within the predetermined range, the controller 150 may fix the state of the inlet control device, such as the inlet control valve and the like, and may stop the compressor 110. Even after performing the surge avoidance operation during a predetermined period of time, if the pressure ratio volatility and current volatility of the compressor 110 are not within the predetermined range (e.g., 2%), the controller 150 may determine that the surge avoidance operation is failed. In this case, in order to prevent greater damage, the controller 150 may stop the compressor 110.

**[0125]** The chiller system 10 according to an embodiment of the present invention may detect and avoid the surge in real time. Accordingly, by detecting the surge in real time and performing the surge avoidance operation upon detecting the surge, damage to the product may be prevented and maintenance costs of the product may be reduced, compared to costs incurred for the maintenance after damage or abnormality occurs.

**[0126]** Meanwhile, upon predicting or detecting the occurrence of surge, the controller 150 may perform the surge avoidance logic, and may determine whether to terminate the logic based on the pressure ratio volatility and current volatility of the compressor 110. That is, by determining whether to enter into the surge detection logic as well as to terminate the surge avoidance logic based on the pressure ratio volatility and current volatility of the compressor 110, the surge avoidance operation may be terminated after the system is fully stabilized.

**[0127]** The existing method, which has been widely used, is a method of determining surge simply based on a current value that is greater than or equal to a reference current value. However, according to an embodiment of the present disclosure, cycle stability may be determined if the pressure ratio volatility and current volatility are satisfied at the same time, and the surge avoidance operation is terminated after moving to a sufficiently safe operating area, such that by operating on a boundary between the surge region and the normal region, it is possible to prevent repeated occurrence of surge.

**[0128]** In addition, according to an embodiment of the present invention, there is no need for an additional sensor, such as a motion sensor, a noise measurement sensor, an image sensor, etc., in order to determine failure in the compressor 110, such that the failure may be predicted before it occurs.

**[0129]** Meanwhile, according to an embodiment of the present invention, when surge occurs, the controller 150 may calculate an operating point, corresponding to a point where the surge occurs, in a 2D coordinate system of the rotational speed and pressure ratio of the compressor 110, and may update a compressor map stored in the storage 170 based on the calculated operating point.

**[0130]** In some embodiments, the entire section of the compressor map may be divided into N number of sections,

so that the compressor map may be partially updated.

The controller 150 may divide the surge line of the compressor map into a plurality of sections based on the rotational speed of the compressor 110. In this case, if surge occurs, the controller 150 may calculate an operating point, corresponding to the point where the surge occurs, in the 2D coordinate system of the rotational speed and pressure ratio of the compressor 110, and may update a section including the operating point among the plurality of sections.

Meanwhile, the controller 150 may calculate a pressure ratio to be updated, by adding a correction value, set for the rotational speed section in which the surge occurs, to the pressure ratio at which the surge occurs.

According to an embodiment of the present invention, the controller 150 may provide the compressor map which may be updated by using operation information at the time when the surge occurs/is detected by the chiller system 10, and when the chiller is operated later under similar operating conditions, the chiller system 10 may control (prevent) the surge by using the updated compressor map so that the surge may not occur.

Upon detecting the occurrence of surge based on the surge detection logic using a machine learning method such as Support Vector Machine (SVM), surge occurrence information may be updated into compressor map information set by a user.

Even the same chiller may have different operating characteristics according to installation environments, locations, and conditions. However, the compressor map is updated based on a surge event occurring in the product, such that the compressor map may be generated and updated according to individual conditions. Accordingly, under the same operating conditions, a surge prevention operation may be performed before entering a surge region, thereby reducing maintenance costs and improving reliability.

The controller 150 may set a low surge prevention line, including a margin from the actual surge line, in the updated compressor map.

When located between the current surge prevention line and the actual surge line, and a temperature deviation (target temperature at the cool water outlet - current temperature at the cool water outlet) is greater than zero, the controller 150 may control the inlet control device while fixing the compressor rotational speed (VFD) to a safe frequency corresponding to a current pressure ratio.

When located between the current surge prevention line and the actual surge line, and a temperature deviation (target temperature at the cool water outlet - current temperature at the cool water outlet) is less than zero, the controller 150 may increase the compressor rotational speed (VFD) up to a safe frequency corresponding to a current pressure ratio while fixing the inlet control device.

When located below the surge prevention line, which is a stable normal region, the controller 150 may maintain the compressor rotational speed at a current level.

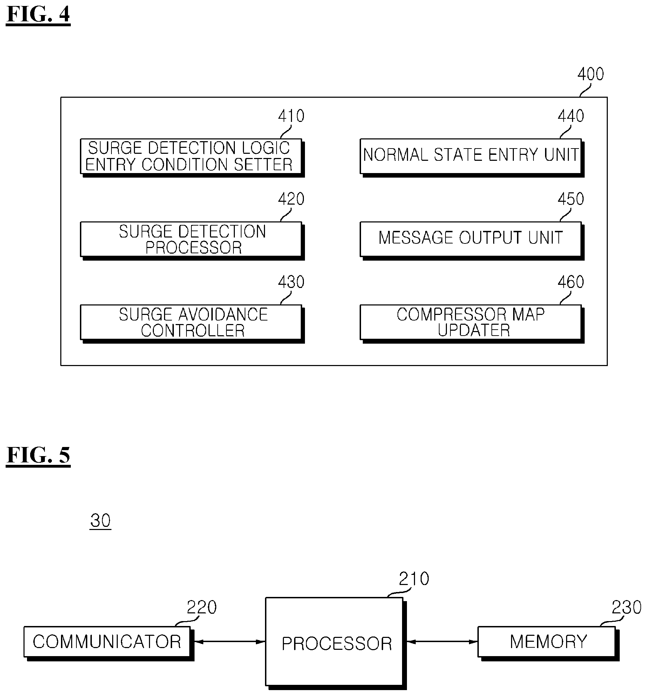

In some embodiments, the chiller 11 may include a surge controller 400 which will be described below with reference to FIG. 4. That is, by providing the surge controller 400 for surge detection and surge related control operations, it is possible to respond to surge more effectively.

Meanwhile, the surge controller 400 may be implemented as a partial block of the controller 150, and may be implemented as a separate block from the controller 150.

In some embodiments, by communicating with the server 30 including the surge controller 400, the chiller 11 may perform a surge prevention operation and a surge avoidance operation.

FIG. 4 is a diagram referred to in the description of a surge controller of a chiller system according to an embodiment of the present invention.

Referring to FIG. 4, the surge controller 400 may include: a surge detection logic entry condition setter 410 configured to select factors required for surge detection logic entry conditions; a surge detection processor 420 configured to extract a factor appropriate for a surge prediction and detection model and including artificial intelligence (AI) trained using the extracted factor; and a surge avoidance controller 430 configured to perform a surge avoidance operation upon detecting surge.

The surge detection logic entry condition setter 410 may analyze data by using chiller operation information, and may select a factor required for surge detection logic entry conditions.

The surge detection processor 420 may extract a factor appropriate for surge prediction/detection model, and may implement the surge prediction/detection model by using training data and tuned hyperparameters in order to secure optimal estimation performance. For example, the surge detection processor 420 may have AI trained using a machine learning method such as SVM and the like, and then may detect surge by using received chiller operation data.

Upon detecting the surge, the surge avoidance controller 430 may perform a surge avoidance operation for adjusting a flow amount and the compressor. Upon detecting the surge, the surge avoidance controller 430 may perform the surge avoidance operation according to operating conditions, and when failing to avoid the surge even after performing the surge avoidance operation, the surge avoidance controller 430 may terminate the compressor 110.

In some embodiments, the surge controller 400 may further include a normal state entry unit 440 configured to determine whether to terminate the surge avoidance operation after recovery from the surge. The normal state entry unit 440 may determine whether to terminate the surge avoidance operation based on a pressure ratio volatility, a current volatility, and the like.

In some embodiments, the surge controller 400 may further include a surge prevention controller (not shown). The surge prevention controller (not shown) serves to prevent re-entry into a surge region, in which a surge prevention line may be set to a right lower side below the actual surge line on the compressor map. In this case, the normal state entry unit 440 may determine whether to terminate the surge prevention control operation performed based on the surge prevention line.

Meanwhile, the surge controller 400 may further include a message output unit 450 configured to output various surge-related messages. The message output unit 450 may output messages providing details about the occurrence, detection, and avoidance of surge. For example, the message output unit 450 may control a display to output a message containing an error code corresponding to the occurrence of surge.

In some embodiments, the surge controller 400 may further include a compressor map updater 460 configured to update the compressor map stored in the storage 170. The compressor map updater 460 may update the compressor map by using surge prediction/detection data. In some cases, for the surge prevention control operation, the compressor map updater 460 may separately store an actual operating area of the chiller 11 and an operating area of the surge prevention control operation.

FIG. 5 is an internal block diagram schematically illustrating a server according to an embodiment of the present invention.

Referring to FIG. 5, the server 30 may include the processor 210, the communicator 220, and a memory 230.

The processor 210 may control the overall operation of the server 30.

According to an embodiment, the processor 210 may be provided with Artificial Neural Networks (ANN) pre-trained by machine learning, to perform abnormality diagnosis of the chiller 11 and the like. For example, the processor 210 may include a Deep Neural Network (DNN), such as Convolutional Neural Network (CNN), Recurrent Neural Network (RNN), Deep Belief Network (DBN), and the like, which are trained using Deep Learning.

Meanwhile, the server 30 may be a server operated by a manufacturer of the chiller 11, or a server operated by a service provider, and may be a cloud server.

The communicator 220 may receive a variety of data, such as state information, operation information, manipulation information, etc., from the chiller 11, the communication module 12, a gateway, other electronic devices, and the like.

Further, the communicator 220 may transmit data, corresponding to the variety of received information, to the chiller 11, the communication module 12, the gateway, other electronic devices, and the like.

To this end, the communicator 220 may include one or more communication modules including an Internet module, mobile communication module, and the like.

The memory 230 may store the receive information, and may store data for generating corresponding result information.

Further, the memory 230 may store data used for machine learning, result data, and the like.

The memory 230 may store data required for the operation of the server 30.

For example, the memory 230 may store a learning algorithm to be performed by the server 30.

A deep learning technique is a type of machine learning techniques that are used for a deep structured learning with multiple layers based on data, and the processor 210 may perform training using the deep learning technique.

Deep Learning may represent a set of machine learning algorithms for extracting critical data from a plurality of data sets on multiple hidden layers.

Deep learning uses a multi-layered structure of DNN such as CNN, RNN, DBN, and the like.

The DNN may include an Input Layer, a Hidden Layer, and an Output Layer.

Meanwhile, the DNN is a neural network with multiple hidden layers.

Each layer includes a plurality of nodes and is connected to a following layer. The nodes have weight values and may be connected to each other.

An output from nodes included in hidden layer 1 may be an input of at least one node included in hidden layer 2. In this case, the input of each node may be a value obtained by applying a weight to the output of the node of a preceding layer. The weight may indicate strength of connection between nodes. The deep learning process may be considered a process for obtaining an appropriate weight.

Meanwhile, an artificial neural network may be trained by adjusting a weight (if necessary, adjusting a bias value as well) of a connection line between the nodes, so as to obtain a desired output for the given input. Further, the artificial neural network may continuously update a weight value by learning.

The server 30 may process the data, received from the communication module 12, by arranging the data and storing the data in a database, so that a user may access the data.

When a variety of data related to the chiller 11, which is connected to the communication module 12, are stored in the memory 140 and are transmitted to a base station, the transmitted data may be signal-processed by the server 30.

The server 30 may classify control information of the chiller 11, and data including ID, Time, Site, and Date information by date and time, and may integrate the classified data by date. Further, the integrated data may be stored in a database.

The server 30 may perform integrity verification (operating cycle of the chiller 11) on the data, if there is no abnormality in the stored data, the server 30 may compress the data and/or store the data in a database.

The server 30 may classify the received data by device and date, and may store the data in a database.

The server 30 may transmit state information of the chiller 11, operation information corresponding the control, and the like to a terminal 40. Further, upon detecting an abnormality in the chiller 11, the server 30 may transmit an alarm message to the terminal 40.

The monitoring terminal 40 may be a mobile terminal, such as smartphone, Personal Digital Assistant (PDA), etc., or a terminal device, such as laptop computer, PC, etc., capable of Internet connection.

The monitoring terminal 40 may transmit a request for a predetermined service to the server 30, and may provide a user interface screen, including the state information of the chiller 11, based on the data received from the server 30.

The monitoring terminal 40 may visualize the data in the DB so that a user may use the data.

The user may check in real time the data related to the chiller 11 by using the monitoring terminal 40.

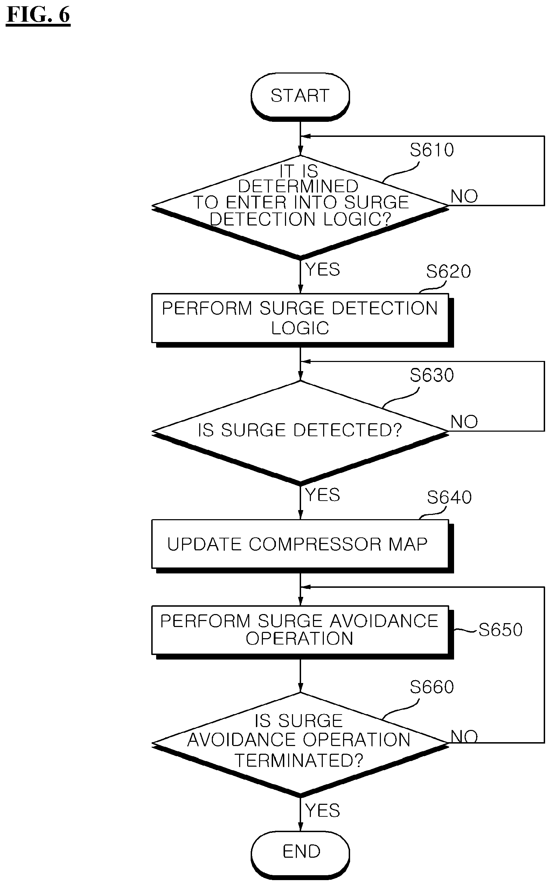

FIG. 6 is a flowchart illustrating a method of operating a chiller system according to an embodiment of the present invention.

Referring to FIG. 6, if a rotational speed volatility and a current volatility of the compressor 110 and a volatility of temperature data sensed at one or more points are within a set reference range, the controller 150 may determine whether to enter into a surge detection logic (S610). For example, if the rotational speed volatility and current volatility of the compressor 110 and a volatility of a cool water outlet temperature are less than respective reference values, the controller 150 may enter into the surge detection logic.

In addition, upon entering into the surge detection logic, the controller 150 may detect surge based on machine learning (S620).

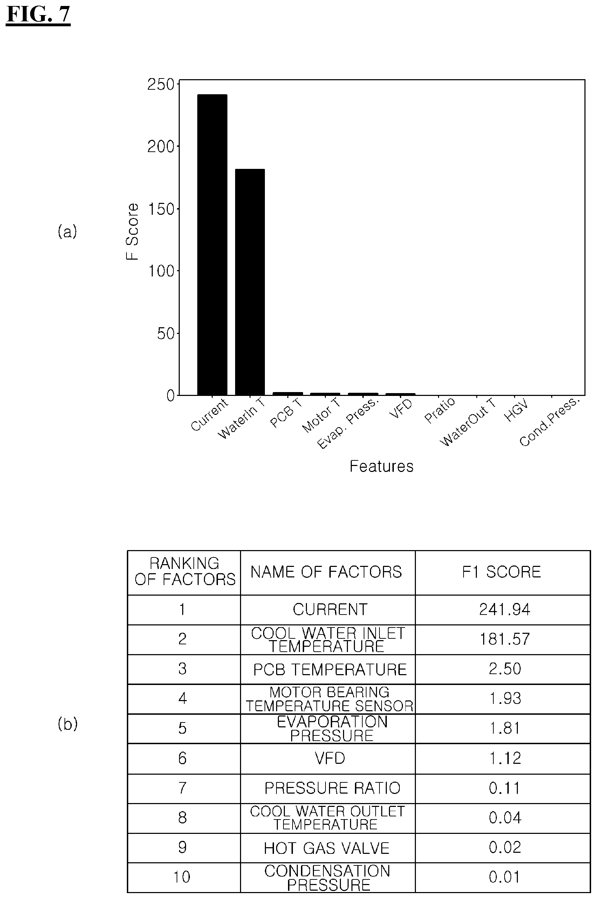

FIG. 7 is a diagram referred to in the description of setting surge detection logic entry conditions and surge detection training according to an embodiment of the present invention., in which an example of selecting a factor used for training is illustrated.

Accurate and consistent data labelling is an absolutely important part in estimation performance of a deep learning-based model, but it is difficult for users to perform the process. Particularly, in order to deal with difficulties resulting from an enormous amount of work for big data and the task of classifying data consistently, the data labelling process may be automated using unsupervised learning algorithms.

In this manner, it is possible to rapidly and accurately construct data used for the surge prediction model, and accuracy of a final estimation model may be improved by accurate labelling of training data. The unsupervised learning algorithms used by an automatic data classifier may include k-means clustering, Self-Organizing Map, Fuzzy C-means, and Hierarchical Cluster Analysis, and by using one or more of the algorithms, the automatic data classifier may automatically classify chiller operation data into surge occurrence data and normal data.

Critical factor selection is also as important as data labelling in estimation performance of a machine learning model. According to an embodiment of the present disclosure, in a list of all factors, the factors are primarily classified by applying a pre-defined physical/electrical factor filter, and by applying a list of selected possible factors to one or more factor selection algorithms among Principle Component Analysis (PCA), Minimum Redundancy Maximum Relevance (mRMR), Wrapper Methods, Chi-Squared Test, and F1 Score, a critical factor that most affects surge prediction may be selected automatically.

FIG. 7 is an example of selecting factors by using F1-Score. F1-Score is a harmonic mean of precision and recall, in which (a) of FIG. 7 illustrates a measurement result of F1 scores for 10 factors. The ranking of the factors may be determined based on the F1 scores as illustrated in (b) of FIG. 7. In the case where only two critical factors are selected, the current and cool water inlet temperature may be detected. For reference, (a) and (b) of FIG. 7 are merely examples, and the factors used in practice may vary.

Meanwhile, the chiller operation data have different units and ranges for each factor, such that it is required to normalize the factors to a predetermined range. If the factors including different ranges are not normalized, the cost function is distorted due to different scales of the factors, and in some cases, a machine learning model may not be trained efficiently as the speed of machine learning decreases and falls into local minima.

The following Equation 1 is a min-max normalization equation generally used for normalization.

[Equation 1]

$X_{norm}$: normalized input data, $X_{max}$: maximum value of the input data

$X_{min}$: minimum value of the input data, $(a, b)$: normalization range (e.g., 0 to 1)

If the input data deviate from the minimum and maximum values of existing training data, the input data may fall outside the normalization range when the min-max normalization is applied thereto, such that the input data are automatically adjusted to the min/max values of the existing training data, which follows the following Equation 2.

[Equation 2]

$$\text{If } X > X_{max}, X_{norm} = b$$
$$\text{If } X < X_{min}, X_{norm} = a$$

A missing value delete filter and a stable state detection filter may be used for data preprocessing. If there is a missing value in data, the missing value delete filter may delete a corresponding data vector so that the value may not be used for model training. If the input data is a k-dimensional vector, but a new data vector is an m-dimensional vector (m<k), the new data is deleted.

[Equation 3]

$$\text{If } X \in \mathbb{R}^k \text{ and } X^{new} \in \mathbb{R}^m, \text{where } m < k, \text{then remove } X^{new}$$

In order to receive only operating data of a cooling cycle in a stable state, the stable state data filter may include a method of determining a stable state of operating data by adopting one or more of an Exponentially Weighted Moving Average (EWMA) Filter and a method of determining whether a target actuator value is reached. The EWMA filter equation determines that the operating data is in a stable state if a filter error is less than or equal to a prescribed filter error value, and the following Equation 4 represents the filter error and a (t-th) filter.

[Equation 4]

$$Error[t] = |X[t] - Filter[t]|$$
$$Filter[t] = Filter[t-1] + \Delta Filter, \quad \text{where}$$
$$\Delta Filter = \alpha(X[t] - Filter[t-1])$$

In determination as to whether the target actuator value is reached, if the actuator value as a predetermined value approximates a control target value during a specific period (T), it is determined that the value is in a stable state.

In order to derive an optimal value of the hyperparameters, various combinations of hyperparameters are tested to find a combination including the highest model performance, and various combinations may be compared by using a grid search algorithm or a random search algorithm. Cross-validation data are used to validate the respective combinations of hyperparameters, in which k-fold cross validation is generally used. In the k-fold cross validation, the cross-validation datasets are divided into k subsets, and then k - 1 subsets are used as training data, and the remaining one dataset is used for validating a corresponding combination of hyperparameters. As a result, a total of k number of model estimation performance results are derived, and a specific combination of hyperparameters is evaluated using an average value of the k number of model results. The data used are divided into a high load region (25 to 100 %), and a low load region (less than 25 %), and hyperparameters are optimized separately for each of the high load region and the low load region.

For example, the grid search algorithm process is performed as follows.

1. defining a search range for finding an optimal combination of hyperparameters Example: C = [0.001, 0.01, 0.1, 1.0, 10.0, 100.0]
2. repeating the following steps 2.1 to 2.4 a number of times corresponding to the number of hyperparameters

2.1. learning using training data by applying a constant C to be considered
2.2. calculating accuracy of a corresponding model by using cross-validation dataset
2.3. in response to the processes being repeated once, setting a maximum accuracy value to any one small value, e.g., 1e-5
2.4. in response to the accuracy value calculated in 2.2. being higher than an existing maximum accuracy value, changing the maximum value to the accuracy value calculated in 2.2., and updating the optimal value C to the corresponding C value

3. after comparisons are made a number of times corresponding to a number of all cases, selecting an optimal value C providing maximum accuracy.

Meanwhile, a surge control algorithm of the existing chiller has a problem in that a surge detection rate in the low load region is lower than a surge detection rate in the high load region. Accordingly, in order to improve the surge detection in the low load region, the present disclosure provides a surge control algorithm of a chiller using machine learning, such as support vector machine learning and the like. The provided method may be applied to the existing chiller, without causing additional costs for purchasing and mounting sensors.

Meanwhile, a determination on a stable state of the initial cycle may be made first in order to perform the surge control algorithm.

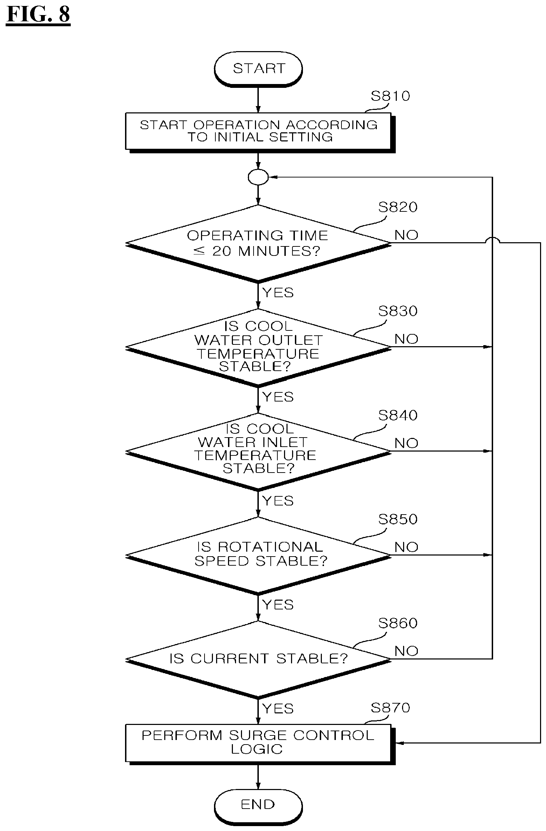

FIG. 8 is a flowchart illustrating a method of operating a chiller system according to an embodiment of the present invention, in which determining a surge detection logic entry condition in a turbo chiller (S610) is described in detail.

Referring to FIG. 8, the turbo chiller may start operation according to an initial setting (S810).

Then, the controller 150 may determine whether the chiller is in a stable state based on a rotational speed volatility and a current volatility, and temperature stability.

The controller 150 may monitor a volatility in data before a reference time elapses (S820). For example, before 20 minutes elapse, the controller 150 may determine whether the surge detection logic entry condition is satisfied.

The controller 150 may determine whether the cool water outlet temperature is stable (S830). For example, if the stability of the cool water outlet temperature is within 0.3 degrees, the controller 150 may determine that the cool water outlet temperature stable.

The controller 150 may determine whether the cool water inlet temperature is stable (S840). For example, if the stability of the cool water inlet temperature is within 0.3 degrees, the controller 150 may determine that the cool water inlet temperature is stable.

The controller 150 may determine whether the rotational speed is stable (S850). For example, if a rotational speed volatility of the compressor is within 2%, the controller 150 may determine that the rotational speed is stable.

The controller 150 may determine whether the current is stable (S860). For example, if a current volatility of the compressor is within 2%, the controller 150 may determine that the current is stable.

In order to determine a cycle stable state, the controller 150 checks, during a first cycle (e.g., 40 seconds), whether changes in the cool water outlet temperature and cool water inlet temperature do not fall outside an average value by $\pm 0.3$ degrees or more (S830 and S840), and whether the rotational speed volatility and current volatility are in a stable state within a range of $\pm 0.2$ % from an average value (S850 and S860).

Meanwhile, the surge detection logic entry conditions are combined by an AND condition, regardless of order. Accordingly, the present disclosure is not limited to the order of determining the entry conditions illustrated in FIG. 8.

As described above, if the surge detection logic entry conditions (S830 to S860) are all satisfied, the controller may enter into a surge control logic (S870 and S620).

Generally, the turbo chiller performs a normal operation after a target temperature at the cool water outlet is reached, but in some cases, the turbo chiller is forced into operation while the target temperature at the cool water outlet is not reached at the customer's side. In this case, since the target temperature at the cool water outlet is not reached, the chiller may not enter into the surge control logic. In order to prevent damage or burnout to the product, the chiller may be forced to enter into the surge control logic (S870 and S620) after a predetermined time (e.g., 20 minutes) elapses (S820), even when the surge control logic entry conditions are not satisfied.

The chiller system 10 according to an embodiment of the present disclosure may perform surge detection based on machine learning in the surge control logic (S870 and S620).

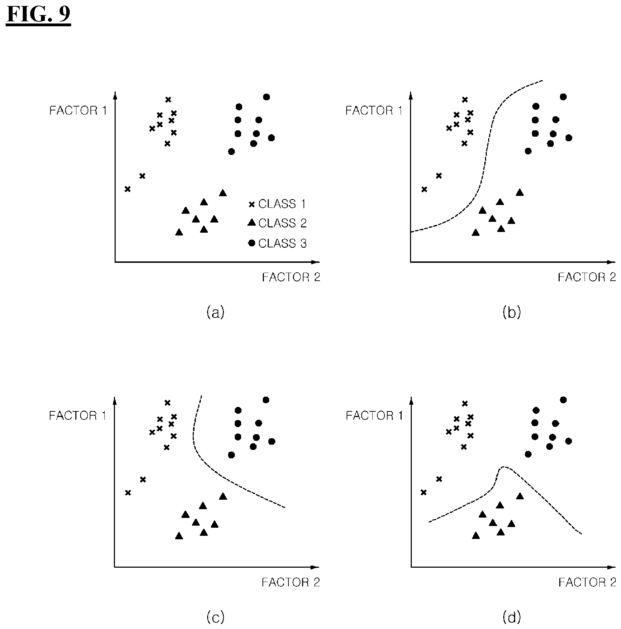

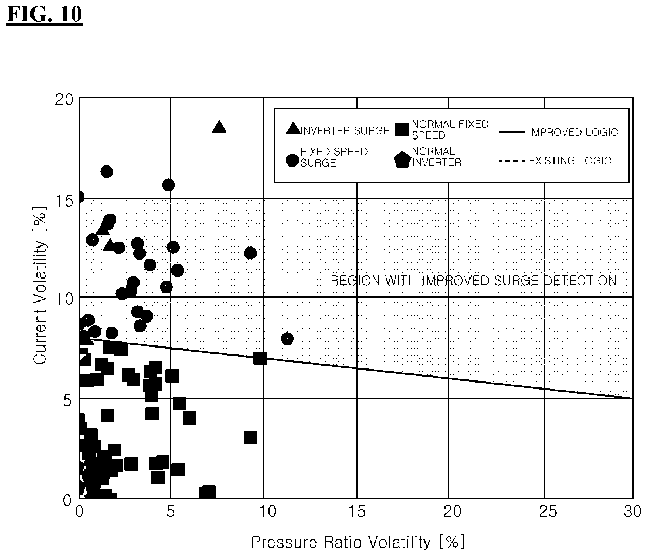

FIGS. 9 and 10 are diagrams referred to in the description of surge detection based on machine learning according to an embodiment of the present invention.

The surge controller 400 according to an embodiment of the present disclosure may train a surge prediction model. In the surge prediction model, a model designed based on the hyperparameter values determined during model optimization is trained using training data. For example, during training of the SVM model, the surge prediction model is trained while maximizing a margin but minimizing a classification failure error.

The surge controller 400 may perform training using data, processed during data preprocessing, as training data. When updating the training data based on previous data, the surge controller 400 may reflect obtained new data into a training dataset, and if performance of the updated model is superior to the existing training model, the surge controller 400 may perform updating using a new model, and if not, the surge controller 400 may maintain the existing model.

When a polynomial kernel is used for the SVM model, a final decision boundary has the following Equation.

[Equation 5]

$$k(x,x') = (x^T x' + 1)^d$$

Herein, x denotes the input data, and d denotes a degree of polynomial. If d is 1, the equation is a linear kernel. Basically, the SVM is a binary classifier, but according to an embodiment of the present disclosure, a multiclass classification model may be used. In order to apply the SVM model, one vs. all classification is used for training. In the one vs. all classification, if a total number of classes is C, training is performed by binarizing a first selected class and the remaining C-1 classes to obtain a decision boundary, and by repeating the process C number of times, C number of decision boundaries may be obtained. In FIG. 9, (a) to (d) are examples of generating a decision boundary. During model validation, the respective C number of decision boundaries are all verified using a test dataset, and among the C number of test values, a class including the highest decision boundary value is selected as a predicted class.

FIG. 10 is a diagram illustrating a test result obtained by comparing a surge detection logic model and an existing surge detection method using a current reference value. As illustrated in FIG. 10, the following Equation 6 may be obtained by classifying normal/surge data of a fixed speed turbo chiller and an inverter turbo chiller, and applying the SVM training.

[Equation 6]

$$y_{sur} = c_1 \Delta I + c_2 \Delta P_r + c_3$$

Herein, $c_1$, $c_2$, and $c_3$, which are variables of the surge detection model, are 1.0, 0.5, and -8.0, respectively; and $\Delta I$ and $P_r$ are the current volatility and pressure ratio volatility in one cycle. The variables of the surge detection model are variables of a model when classic surge occurs, and when changed to case where a mild surge or more occurs, the variables $c_1$, $c_2$, and $c_3$ of the surge detection model are 1.0, 0.5, and -5.2, respectively. As for surge determining conditions, if $y_{sur}$ is greater than 0, it is determined that surge occurs, and if $y_{sur}$ is smaller than or equal to 0, it is determined that a response is normal.

Referring to FIG. 10, the existing surge detection method using a current reference value fails to detect surge, but by using the surge detection model according to an embodiment of the present invention, surge detection may be improved.

The chiller system 10 and/or the server 30 according to an embodiment of the present invention. may predict and analyze a state of the chiller 11 based on input data in a training modelling process.

The chiller system 10 and/or the server 30 identifies a state of the chiller 11, and may control the chiller 11 according to designed control procedures of control modelling.

Upon completing data preprocessing, the chiller system 10 and/or the server 30 may perform computation of machine learning models to determine the state of the chiller 11 and to control the chiller 11.

In order to apply machine learning models, requiring high performance computing, to the existing chiller, it may be preferable to use resources of the server 30.

If the chiller 11 has hardware resources including powerful computing performance, all the processes of receiving and preprocessing data, computing machine learning models, and deriving prediction results may be implemented using internal resources embedded therein.

The chiller system 10 and/or the server 30 may learn and process operation information according to a machine learning model. Further, the chiller system 10 may perform a control operation based on determination/prediction of a machine learning model.

Meanwhile, upon detecting surge (S630), the chiller system 10 may perform a surge avoidance operation (S650). For example, the surge avoidance operation may be performed by increasing a flow amount, reducing head, controlling the compressor RPM, the inlet control device, and the HGBP, and the like.

Meanwhile, upon determining that the chiller 11 enters a stable operation region by the surge avoidance operation, the controller 150 may terminate the surge avoidance operation (S660).

In some cases, without immediately entering a normal operation mode after the surge avoidance operations (S650 and S660), the controller 150 may perform a flexible operation for a predetermined period of time and then enter the normal operation mode. If the pressure ratio volatility and current volatility of the compressor 110 are within a predetermined range, the controller 150 may enter into the flexible operation for gradually increasing revolutions of the compressor 110.

However, if the pressure ratio volatility and current volatility of the compressor 110 are not within the predetermined range, the controller 150 may fix the inlet control device, such as the inlet control valve and the like, and may stop the compressor 11.

According to an embodiment of the present invention, when surge occurs, the compressor map may be updated based on data in order to generate and manage the compressor map optimized for the product (S640).

Upon detecting surge (S630), the controller 150 may update the compressor map including a surge line separating a surge region, in which surge occurs, and a normal region (S640).

Then, the controller 150 may control the operation of the chiller 11 by using the updated compressor map. For example, the controller 150 may control the chiller 11 by adding an offset to a surge line which is changed when a surge event occurs in the actual product and/or an actual surge line of the corresponding product. Accordingly, the chiller system 10 according to an embodiment of the present invention may perform an operation optimized for the corresponding product and installation environment of the product.

After surge occurs, the chiller system 10 according to an embodiment of the present invention may operate without causing surge under the same operating conditions. As the need for inspection by a service engineer is not required or is reduced, the following effects may be produced: reducing service costs and time; improving customer reliability; resolving downtime issues caused while the product is not in operation; reducing costs incurred for replacing components due to burnout of the compressor; distributing service complaints before a peak season hits, and the like.

The updating of the compressor map (S640) in the flowchart of FIG. 6 is shown as a preceding operation before the surge avoidance (S650), but the present disclosure is not limited thereto. The updating of the compressor map (S640) may be performed concurrently with the surge avoidance (S650) or may be performed after the surge avoidance (S650) is complete, or while the surge avoidance (S650) is performed.

Meanwhile, the surge line may be divided into a plurality of sections based on the rotational speed of the compressor 110. The controller 150 may calculate an operating point corresponding to a point of surge in the 2D coordinate system of the rotational speed and the pressure ratio of the compressor 110, and may update a section including the operating point among the plurality of sections. Accordingly, by updating the compressor map for each section, the compressor map may be updated with improved precision.

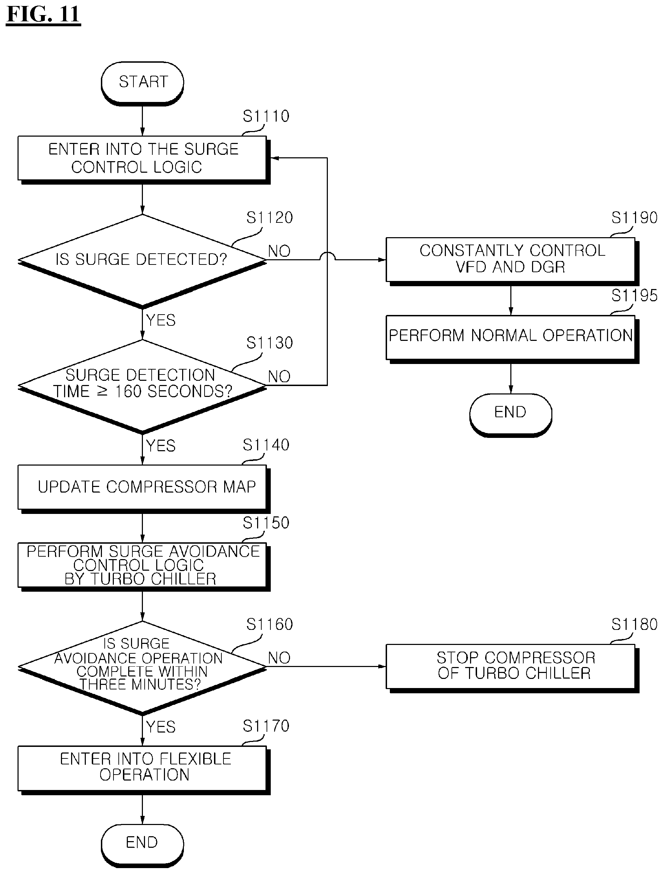

FIG. 11 is a flowchart illustrating an operating method of a chiller system according to an embodiment of the present invention, in which an example of performing processes from the surge detection (control) logic (S620) to the surge avoidance operation (S660) by the chiller is described in detail.

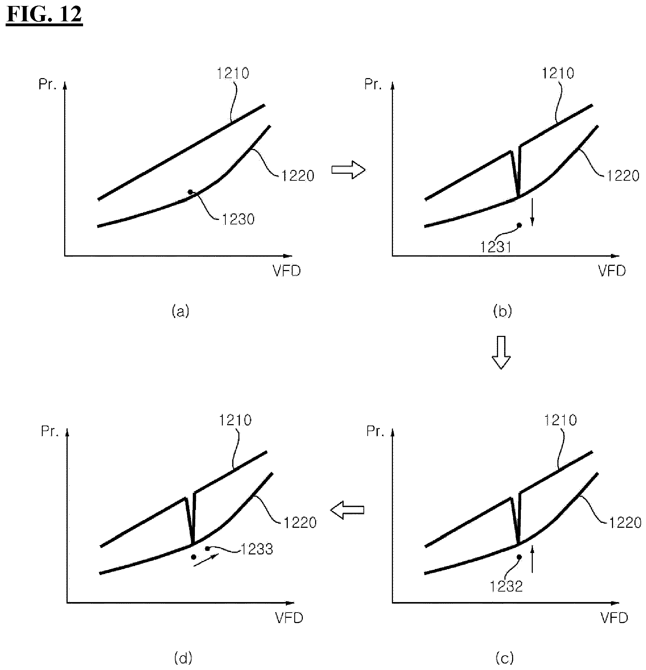

FIGS. 12 to 14 are diagrams referred to in the description of surge control according to an embodiment of the present invention.

Referring to FIG. 11, if surge control logic entry conditions are satisfied, the chiller system 10 according to an embodiment of the present invention may enter into the surge control logic (S1110). For example, the surge control logic entry conditions are as follows: stability of cool water inlet temperature is 0.3 degrees; the rotational speed volatility is 2%; and the volatility in inlet control devices (IGV, DGR, HGBP) is 2%.

The chiller system 10 according to an embodiment of the present invention detects surge (S1120). The chiller system 10 according to an embodiment of the present disclosure may detect surge based on machine learning (S1120).

A surge phenomenon occurs due to an unstable fluid flow in the compressor 110 and the condenser 120 of the chiller 11, in which a refrigerant flows backward into the compressor 110, causing variations in flow and current, as well as temperature change of the condenser (evaporator).

During one cycle (e.g., 40 seconds), if the surge control logic entry conditions, including a volatility of the cool water inlet temperature being within a range of ±0.3 degrees and the rotational speed volatility and inlet control devices (IGV, DGR, HGBP) being within 2% are satisfied (S1110), the chiller system 10 detects surge using SVM learning (S1120).

In some embodiments, upon detecting the surge (S1120), during a surge detection time (e.g., four cycles), the chiller system 10 checks whether a surge detection event occurs continuously (S1130), and after a set period of time elapses, the chiller system 10 automatically performs the surge avoidance control logic (S1150).

The surge occurs due to a high compression ratio with respect to a flow amount, and refers to an irregular and unstable state of a fluid flow due to idling of a rotor of the compressor 110. Such unstable state may limit the operation and control of the compressor 11 of the chiller 11, and the occurrence of surge may cause a risk of damage to the components of the compressor 110.

In a fixed speed turbo chiller, a performance curve of the turbo chiller may be shown according to a change in the inlet control device while the compressor rotational speed is fixed, and surge occurs when the turbo chiller deviates from an operating area, such that it is required to force the turbo chiller to move into the operating area regardless of load or operating conditions. If surge occurs in a high load region, an opening of the inlet control device is closed, and the surge avoidance operation is performed by reducing a pressure difference by suppressing a rise in the cool water outlet temperature. By contrast, if surge occurs in a low load region, the opening of the inlet control device is opened, and an operating point is forced to move into the operating area. In the low load region, there may be a case where the opening may not be opened up to a safe operating area due to an increase in compressor current. At worst, a target temperature at the cool water outlet of the chiller should be abandoned or the chiller should be tripped to protect the product. In the high load region, surge may be detected relatively easily and may be avoided, but in the low load region, it is difficult to control surge due to a correlation between the compressor current and the inlet control device.

The surge control operation is performed with the purpose of not affecting the operation of the compressor of the chiller, and may be performed by increasing a passing flow amount, reducing head, controlling the compressor revolutions, the inlet control device, and the HGBP, and the like.

A partial load of the turbo chiller refers to a cycle when a chiller reduces its capacity when a refrigeration demand of a space or a building to be air-conditioned and refrigerated is reduced. When a load of a positive displacement type compressor decreases, the pressure at the inlet/output of the compressor is reduced, and after a refrigerant circulation amount corresponding to the reduced pressure is determined, a partial load operation is performed with reduced refrigeration capacity. However, the product, such as the turbo chiller, which performs compression by rotation, has a low compression ratio compared to the positive displacement type compressor. During a low load operation, a compression ratio may be partially reduced by adjusting the refrigerant flow amount using the inlet control device, and in the case where the compression ratio may not be reduced using the inlet control device, the HGBP valve is applied. The HGBP valve returns the refrigerant in the cycle without using the compressed refrigerant for refrigeration, such that power consumption of the compressor of the turbo chiller is not changed but only the refrigerant capacity is reduced, thereby decreasing the coefficient of performance, as well as placing a burden on the chiller when the operation is performed continuously. Accordingly, it is preferable that the operation of the HGBP valve is applied as a complement in the case where surge may not be avoided by the avoidance operation of other inlet control devices and the like.

FIG. 12 is a diagram illustrating a surge avoidance operation of a turbo chiller, in which a surge line 1210 and an operating point 1230 and the like are shown on the rotational speed (VFD) and compression ratio (Pr.) of the compressor.

Referring to FIG. 12, the chiller system 10 has the surge line 1210 stored at the time of product shipping. A left side of the surge line 210 indicates a surge region where surge occurs, and a right side of the surge line 210 indicates a normal region where no surge occurs.

Meanwhile, according to product and installation environments, there may be a difference between the set surge line 1210 and an actual surge line 1230. Referring to (a) of FIG. 12, the operating point 1230 is located on the right side of the surge line 1210, but on the left side of the actual surge line 1230, such that surge may actually occur. In this case, the surge may be detected (S1120), and the surge avoidance control logic may be operated (S1150).

For example, when the surge is detected during operation (S1120), the inlet control device, such as a DGR valve and the like, is opened to 100%, such that the operating point may be moved below the surge line.

Meanwhile, when no surge is detected (S1120), the compressor 110 and the inlet control device are set to a general normal control state (S1190), and a normal operation is performed (S1195). For example, based on a map surge line (operating line) of the compressor map, the compressor rotational speed (VFD) and the DGR valve may be controlled so that the operating point may not exist in the surge region.

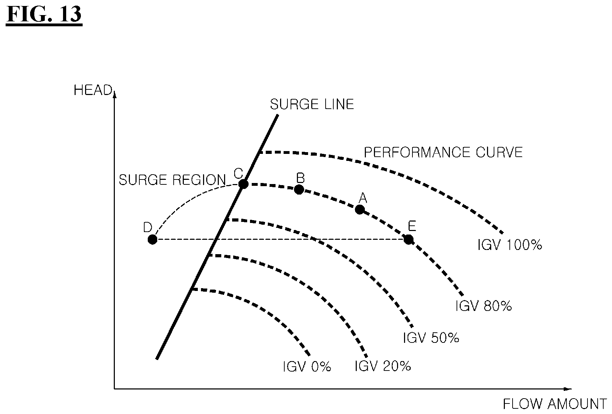

FIG. 13 is a diagram illustrating a performance curve of a turbo chiller. A manufacturer displays, through experiments, compression ratio, efficiency, flow amount, surge point, and maximum compression ratio in diagram form, and provides the values. The pressure and flow amount of the turbo chiller are used to show the compressor performance, in which design point A is a reference point of impeller design, indicating a flow amount with respect to pressure used as a reference when the inlet control device is opened to the maximum; and point B indicates a state in which due to an increase in pressure resistance of the turbo chiller, a compression ratio of the compressor increases beyond the design point A, and a flow amount is reduced. Surge point C is a point at which system pressure resistance increases continuously to reach an intersection point of the performance curve of the compressor and the surge line, and is a point at which surge occurs causing backflow in the compressor. Point D is a surge section, and point E is a state in which due to a decrease in pressure resistance of the turbo chiller, a compression ratio of the compressor decreases below the design point, and a flow amount increases.

The surge develops in processes of C → D → E → C ..., and when surge is repeated continuously, a range of variations increases. As for each section, the process of C → D is a process in which backflow occurs as the pressure resistance increases, such that a flow amount is reduced to point D where the flow amount is zero. In the process of D → E, pressure generated in the compressor becomes greater than a current pressure, such that a flow is changed to a forward direction (backward flow → forward flow), to move to point E. In this case, a pressure change is constant and only the generated flow amount increases. In the process of E → C, the pressure of the compressor is excessive such that the flow is moved to point C along the performance curve of the turbo chiller. By defining the above processes as a one-time surge (one cycle), and if surge occurs five times or more, a range of pressure variations increases, thereby increasing a risk of damage to the impeller. Due to the surge, abnormalities may occur, including refrigerant backflow, abnormal vibrations and noise, impeller or gear damage, current hunting, and the like. The surge is an unstable state of the compressor and the condenser of the turbo chiller, in which pressure at the condenser becomes greater than that at the end of the wheel of the compressor, causing a backflow from the condenser to the compressor.

In order to solve the problem of surge, it is required to increase the flow amount or to reduce the compression ratio so as to move within the surge line in the compressor performance curve. When the surge occurs, it is required to be in an unloading state, in which case an intake amount increases by opening the HGBP valve. Generally, while in operation, the compressor properly controls the speed of the inlet control device so as not to cause the surge, and sets a minimum degree of opening of the inlet control device in order to prevent the occurrence of surge during the operation of the compressor.

Referring to FIG. 13, while the head is maintained at a constant level, the compressor 110 is difficult to operate in a region where the flow rate is low. When the compressor 110 operates in the region including a low flow rate along the surge line in FIG. 13, the surge is highly likely to occur.

Referring to (b) of FIG. 12, at the operating point 1231, the compression ratio is reduced compared to the existing point 1230, such that surge may be avoided (S1160).

Meanwhile, upon completing the surge avoidance operation (S1160), by adjusting a degree of opening of the inlet control device, such as the DGR valve and the like, the compressor 110 returns to a normal operation (S1170). Upon completing the surge avoidance operation (S1160), the surge control operation is performed in a flexible mode and then is initialized to a normal operation (S1170). It may be determined whether the surge avoidance is complete based on whether the compression ratio volatility and current volatility are within a predetermined reference value.

Meanwhile, if the surge avoidance is not complete within a predetermined period of time (S1160), the compressor 110 may stop operating (S1180). In this case, while maintaining a degree of opening of the inlet control device, the compressor 110 may stop operating (S1180).

According to an embodiment of the present invention, the compressor map may be updated by using the rotational speed volatility and compression ratio volatility of the compressor at the point of surge (S1140).

Referring to (a) and (b) of FIG. 12, the surge line 1210 may be updated by reflecting the operating point 1230 at the point of surge. The updated surge line 1211 may be closer to the actual surge line 1230 than the existing surge line 1210.

The compressor map is updated using the compressor rotational speed and the compression ratio in an initial surge detection section (S1140). The compressor map is updated using the compressor rotational speed (VFD) and the compression ratio in the initial surge detection section.

When the occurrence of surge is detected during a plurality of cycles, the compressor map is updated using the initial data on the occurrence of surge, and when the compressor rotational speed (VFD) increases, the compression ratio may also increase.

Meanwhile, in order to update the compressor map, minimum and maximum compressor rotational speed sections may be divided into N number of sections. If surge occurs at a point between $V_{i-1}$ and $V_i$, an equation for updating the compressor map to calculate the compression ratio to be updated in the compressor map is as follows.

[Equation 7]

$$\bar{P}_{v_i} = P_{r,est} + \alpha \left( \frac{P_{v_i} - P_{v_{i-1}}}{v_i - v_{i-1}} \right) (v_i - v_{est})$$

Herein, $V_{i-1}$ and $V_i$ are compressor rotational speeds; $P_{v-1}$ and $P_{vi}$ are compression ratios corresponding to the $V_{i-1}$ and $V_i$ rotational speed sections; $v_{est}$ and $P_{vest}$ denote the rotational speed and compression ratio at a point where an initial surge occurs during the operation of the chiller. A slope parameter $\alpha$ may be set in a range of $0 < \alpha \le 1$, and may be set to a smaller value when an operating area of the turbo chiller is considered conservatively.

Upon completing the surge avoidance (S1160), the surge control operation may be performed in a flexible mode and then is initialized to a normal operation (S1170). Referring to (c) of FIG. 12, upon completing the surge avoidance (S1160), the DRG value is closed and the normal operation is performed (S1170), such that the compression ratio may increase again (1232). In this case, as the compression ratio increases again, the operating point 1232 may be controlled not to deviate from the updated surge line 1211. For example, referring to (d) of FIG. 12, by adjusting an operation frequency of the compressor to change the rotational speed, it is possible to prevent the operating point 1233 from entering the surge region.

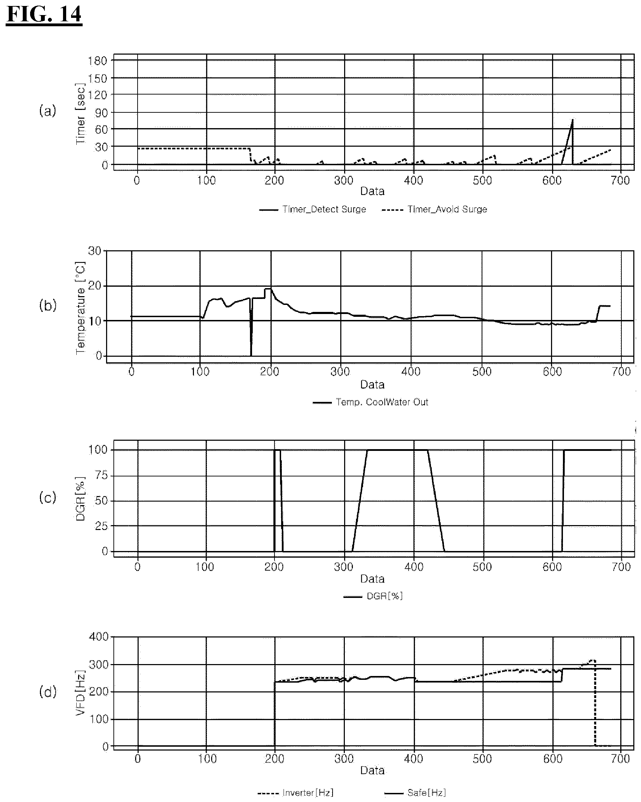

FIG. 14 is a diagram illustrating waveforms when a turbo chiller controls surge detection and surge avoidance according to an embodiment of the present invention.

In FIG. 14, (a) illustrates a surge detection timer and a surge avoidance timer which cumulatively count when surge is detected during a predetermined cycle such that the count increases, and then when the surge is not detected, the timers are initialized to zero, thereby including a shape of a triangular wave in which the count increases from zero and then is initialized to zero.

In FIG. 14, (b) illustrate a cool water outlet temperature in temperature information used in this embodiment.

In FIG. 14, (c) illustrates a DGR valve, and (d) illustrates a compressor rotational speed.

In FIG. 14, data are received during a data sampling period of five seconds, and at about a 200th data point, the turbo chiller starts operation. After operation, the DRG valve of the turbo chiller is opened to 100%, and when entering into a flexible operation mode, the DRG valve is closed. At about a 250th data point, conditions that a volatility of the cool water inlet temperature is within 0.3 degrees, a difference between a target temperature at the cool water outlet and an actual temperature at the cool water outlet is within 0.3 degrees, and the rotational speed volatility and current volatility of the compressor are within 2 % are satisfied, such that the turbo chiller detects surge. In an interval from a 300th data point to a 450th data point, it is confirmed whether a surge control logic operation is performed when the opening of the DGR valve is changed during surge detection. It can be confirmed that during the operation of the DRG valve, the surge control logic operation is not performed, and after the DGR valve is closed, the turbo chiller enters into a flexible operation mode and is changed to a normal operation.

While the cool water inlet temperature increases to generate surge, the turbo chiller starts to perform surge detection at a 580th data point. When detecting the surge continuously during four periods (160 seconds), the turbo chiller proceeds to a surge avoidance operation. The surge avoidance operation is performed by checking whether the product is stabilized during the count (180 seconds) of the surge avoidance timer, while maintaining a degree of opening of a change control device at 100 %.

In FIG. 14, the surge avoidance operation is performed starting from about a 610th data point, and if the current volatility and compression ratio volatility during the surge avoidance operation are stabilized within 2 %, the turbo chiller enters into a flexible operation mode and returns to a normal operation, but if any one of the current volatility or compression ratio volatility is not satisfied, the turbo chiller stops operation while the change control device is opened to 100 %.

Before the updated compressor map of the turbo chiller is applied, the same initial surge line 1210 is set for all turbo chiller products. However, according to an embodiment of the present disclosure, the surge line is updated by self-learning the surge which actually occurs at a site where the products are installed. During operation, the turbo chiller performs self-learning when detecting the surge, and updates the actual surge line.

The surge line of the turbo chiller varies depending on a refrigeration capacity of products, such that it is not easy to define the surge line for each product. Manufacturers spend much time and cost on fining the surge line by adjusting the compressor rotational speed or the inlet control device.

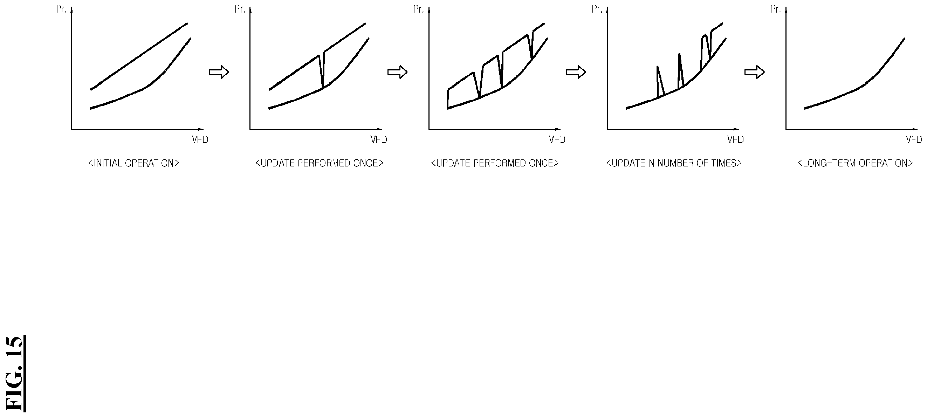

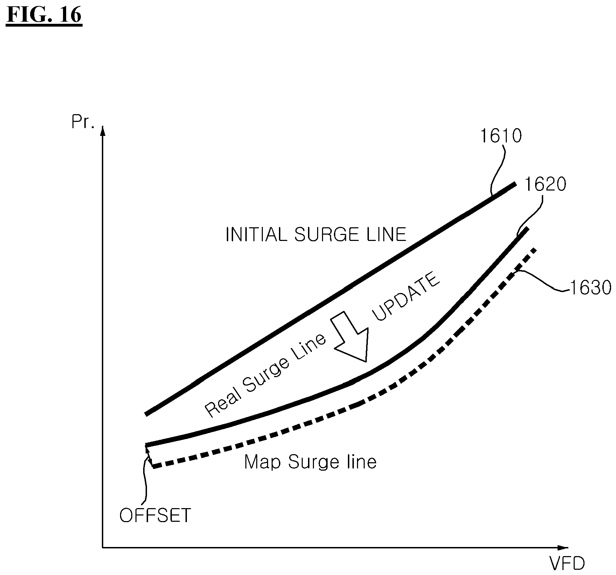

FIGS. 15 and 16 are diagrams referred to in the description of updating a compressor map according to an embodiment of the present invention.

FIG. 15 is a diagram sequentially illustrating an example of updating a surge line of the compressor map by self-learning according to an embodiment of the present invention.

Referring to (a) of FIG. 15, during the initial operation, an upper surge line is set. A lower line is an actual surge line, in which while setting the surge line of the compressor map to a higher level than the actual surge line, the compressor map is updated when surge occurs during the initial operation of the turbo chiller.

The updating is performed once by performing the processes described above with reference to FIG. 12. An existing surge control algorithm prevents the occurrence of surge by adjusting the entire surge line when the surge occurs on a preset surge line, but the compressor map of the present disclosure is updated by dividing the rotational speed section into N number of sections, thereby partially adjusting the surge line rather than adjusting the entire surge line.

Subsequently, when the surge occurs, the compressor map is updated by reflecting the surge event. FIG. 15 sequentially illustrates updating processes performed one-time, four times, and N times.

Meanwhile, when updating is performed sufficiently after use for a long period of time, the surge line set in the compressor map coincides with the actual surge line, as shown in a rightmost graph.

Referring to FIG. 16, the same initial surge line 1610 is set for all the chiller products. According to an embodiment of the present invention, the compressor map is updated when a surge event occurs, and the surge line 1610 becomes gradually closer to the actual surge line 1620. The controller 150 may control the chiller 11 based on the updated surge line 1620.

In some embodiments, a surge prevention line 1630 may be set as an operating line for preventing surge. The surge prevention line 1630 is a virtual surge line set by the controller, and is set below the actual surge line, such that operation may be performed in a safe operating area all the time. The surge prevention line may be referred to as a map surge line or an operating line. The surge prevention line in the compressor map is a virtual line formed by reflecting a surge margin, so that the chiller may operate in a normal operating area without causing surge. For example, the surge margin may indicate a difference between an actual compression ratio and a compression ratio of the surge prevention line at the current rotational speed.

The controller 150 may control the chiller 11 based on the surge prevention line 1630. If the surge margin is less than zero and a deviation (target temperature at the cool water outlet - current temperature at the cool water outlet) is greater than zero, the controller 150 may increase the compressor rotational speed to a safe frequency corresponding to the compression ratio at a current operating point, regardless of a degree of opening of the DGR valve.

By contrast, if the deviation is less than zero, if the safe frequency corresponding to the compression ratio at the current operating point is equal to the compressor rotational speed, the controller 150 may fix the compressor rotational speed and then may increase the degree of opening of the DRG valve. If the surge margin is greater than zero, the controller 150 may adjust the compressor rotational speed.

FIG. 17 is a schematic diagram illustrating a chiller according to an embodiment of the present disclosure, and FIG. 18 is a schematic diagram illustrating an internal structure of an ejector of FIG. 17.

Referring to FIG. 17, the chiller system 10 may include the compressor 110, the condenser 120, the expander 130, the evaporator 140, and/or an ejector 1700.

The compressor 110 may compress a refrigerant into a high-temperature and high-pressure gaseous refrigerant and may discharge the refrigerant. In this case, at least a portion of the high-temperature and high-pressure gaseous refrigerant, discharged from the compressor 110, may be delivered to the condenser 120, and a portion of the remaining refrigerant, not delivered to the condenser 120, may be delivered to the ejector 1700.

The condenser 120 may perform heat exchange between the high-temperature and high-pressure gaseous refrigerant, discharged from the compressor 110, and the coolant, and may discharge the refrigerant, condensed by the heat exchange, to the expander 130.

The expander 130 may expand the refrigerant condensed by the condenser 120, and may deliver a low-temperature liquid refrigerant to the evaporator 140.

The evaporator 140 may perform heat exchange between the low-temperature liquid refrigerant, delivered from the expander 130, and the cold water, and may discharge a low-pressure gaseous refrigerant by heat exchange. In this case, at least a portion of the low-pressure gaseous refrigerant, discharged from the evaporator 140, may be delivered to the compressor 140, and a portion of the remaining refrigerant, not delivered to the compressor 110, may be delivered to the ejector 1700.

The ejector 1700 may include a first inlet 1710, a second inlet 1729, and a discharge portion 1730.

The chiller system 10 according to an embodiment of the present disclosure may further include an inlet control valve 1800 disposed in a pipe connected to the first inlet 1710 of the ejector 1700, and controlling a flow amount of a refrigerant flowing into the first inlet 1710. The inlet control valve 1800 may be a DGR valve. A flow amount of the high-temperature and high-pressure gaseous refrigerant may be determined according to a degree of opening of the inlet control valve 1800.

The ejector 1700 may discharge a mixed refrigerant containing a mixture of the high-temperature and high-pressure gaseous refrigerant, discharged from the compressor 110, and the low-pressure gaseous refrigerant discharged from the evaporator 140. The ejector 1700 will be described below with reference to FIG. 18.

Referring to FIG. 18, the high-temperature and high-pressure gaseous refrigerant, discharged from the compressor 110, may flow into the ejector 1700 through the first inlet 1710 and may pass through a nozzle 141 at a high speed. In this case, while the refrigerant flowing through the first inlet 1710 passes through the nozzle 1741, a flow velocity of the refrigerant may increase, and pressure thereof may decrease. Meanwhile, as the pressure of the refrigerant decreases while passing through the nozzle 1741, a portion of the low-pressure gaseous refrigerant, discharged from the evaporator 140, may flow into the second inlet 1720 due to a pressure difference.

The refrigerant, ejected by passing through the nozzle 1741, and the low-pressure gaseous refrigerant, flowing through the second inlet 1720, may be mixed in a mixer 1742, and a flow velocity of the mixed refrigerant, containing a mixture of the refrigerant ejected by passing through the nozzle 1741 and the refrigerant flowing through the second inlet 1720, may decrease and the pressure of the refrigerant may increase, such that the refrigerant may be discharged from the ejector 1700 through the discharge portion 1730.

The mixed refrigerant, discharged from the ejector 1700, may be delivered to the compressor 110. For example, the mixed refrigerant discharged from the ejector 1700 may be supplied to a housing 1600 including a refrigerant inlet of the compressor 110.

Meanwhile, the chiller system 10 according to an embodiment of the present disclosure may further include an inlet control valve 1800 disposed on a pipe connected to the first inlet 1710 of the ejector 1700 and controlling a flow amount of the refrigerant flowing to the first inlet 1710. The inlet control valve 1800 may be an Electronic Expansion Valve (EEV).

The chiller system 10 according to an embodiment of the present disclosure may include the ejector 1700 for mixing a portion of the refrigerant, discharged from the compressor 110, and a portion of the refrigerant discharged from the evaporator 120, and discharging the mixed refrigerant. The ejector 1700 may include the first inlet 1710, through which the portion of the refrigerant discharged from the compressor 110 flows, and the second inlet 1720 through which a portion of the refrigerant discharged from the evaporator 120 flows. In this case, the inlet control valve 1800 may be disposed on a pipe connected to the first inlet 1710 so as to control a flow amount of the refrigerant flowing into the first inlet 1710.

In the case where the chiller system 10 includes the ejector 1700, the low-pressure refrigerant, discharged from the evaporator 140 after circulating through the system, flows together with the high-pressure refrigerant, such that a flow amount of the refrigerant circulating through the refrigeration system relatively increases, thereby increasing the efficiency of the refrigeration system of the chiller system 10.

Further, while the present disclosure has been described and illustrated herein with reference to the preferred embodiments and diagrams thereof, the present disclosure is not limited to the aforementioned embodiments. It should be understood that various modifications of the embodiments are possible by those skilled in the art without departing the technical scope of the present invention defined by the appended claims, and the modifications should not be understood separately from the technical principles or prospects of the present disclosure.

**Claims**

1. A chiller system (10) comprising:

   a compressor (110) configured to compress a refrigerant by rotation;
   a condenser (120) configured to condense the refrigerant compressed by the compressor (110);
   an expander (130) configured to expand the condensed refrigerant;
   an evaporator (140) configured to evaporate the expanded refrigerant;
   a sensor unit (160) including a plurality of temperature sensors, a speed sensor for sensing a rotational speed of the compressor (110), and a current sensor for sensing a current of the compressor (110); and
   a controller (150) configured to determine whether to enter into a surge detection logic based on a volatility of data sensed by the sensor unit (160), and configured to perform surge detection,
   wherein in response to a rotational speed volatility and a current volatility of the compressor (110) and a volatility of one or more of temperature values sensed by the plurality of temperature sensors falling within reference ranges set for the respective values, the controller (150) enters into the surge detection logic.

2. The chiller system of claim 1, wherein, when the surge occurs, the controller (150) performs a surge avoidance logic for changing a flow amount of the refrigerant, flowing into the compressor (110), or the rotational speed of the compressor (110).

3. The chiller system of claim 1 or 2, wherein the controller (150) is configured to:

   predict and detect occurrence of surge using pre-trained artificial intelligence (AI) based on machine learning;
   upon predicting or detecting the occurrence of surge, perform the surge avoidance logic; and
   based on a pressure ratio volatility and the current volatility of the compressor (110), determine whether to terminate the surge avoidance logic.

4. The chiller system of any one of claims 1 to 3, wherein the controller (150) comprises:

   a surge detection logic entry condition setter (410) configured to select factors required for surge detection logic entry conditions;
   a surge detection processor (420) configured to extract a factor appropriate for a surge prediction and detection model and including artificial intelligence (AI) trained using the extracted factor;
   a surge avoidance controller (430) configured to perform a surge avoidance operation upon detecting the surge;
   a normal state entry unit (440) configured to determine whether to terminate the surge avoidance operation after recovery from the surge; and
   an error message output unit (450) configured to output an error message corresponding to the occurrence of surge.

5. The chiller system of any one of claims 1 to 4, further comprising an inlet control valve (1800) configured to control the flow amount of the refrigerant flowing into the compressor (110),
   wherein, upon detecting the surge, in response to a target temperature at a cool water outlet being greater than a current temperature at the cool water outlet, the controller (150) adjusts the inlet control valve (1800) to 100 %, and in response to the target temperature at the cool water outlet being lower than the current temperature at the cool water outlet, the controller (150) fixes the inlet control valve (1800) and increases the rotational speed of the compressor (110).

6. The chiller system of claim 5, wherein, when failing to complete the surge avoidance operation during a predetermined period of time, the controller (150) fixes the inlet controller valve and stops the compressor (110).

7. The chiller system of claim 6, further comprising a hot gas bypass (HGBP) valve for bypassing a high-temperature and high-pressure refrigerant, discharged from the compressor (110), to an inlet side of the compressor (110), wherein upon the surge, the controller (150) operates the HGBP valve.

8. The chiller system of any one of claims 5 to 7, further comprising an ejector (1700) configured to discharge a mixed refrigerant containing a mixture of a portion of the refrigerant, discharged from the compressor (110), and a portion of the refrigerant discharged from the evaporator (140), and including a first inlet (1710), through which a portion of the refrigerant discharged from the compressor (110) is introduced, and a second inlet (1729), through which a portion of the refrigerant discharged from the evaporator (140) is introduced,
wherein the inlet control valve (1800) is disposed in a pipe connected to the first inlet (1710) and controls a flow amount of the refrigerant flowing into the first inlet (1710).

9. The chiller system of any one of claims 5 to 8, wherein:

in response to the pressure ratio volatility and current volatility of the compressor (110) being within a predetermined range, the controller (150) enters into a flexible operation for gradually increasing revolutions of the compressor (110); and
in response to the pressure ratio volatility and current volatility of the compressor (110) not being within the predetermined range, the controller (150) fixes the inlet control valve (1800) and stops the compressor (110).

10. The chiller system of any one of claims 1 to 9, wherein in response to the rotational speed volatility and current volatility of the compressor (110) and the volatility of temperature values sensed by the plurality of temperature sensors not falling within reference ranges set for the respective values until a predetermined period of time elapses, the controller (150) enters into the surge control logic.

11. The chiller system of any one of claims 1 to 10, further comprising a storage (170) for storing a compressor map including a surge line separating a surge region, in which the surge occurs, and a normal region,
Wherein, when the surge occurs, the controller (150) calculates an operating point, corresponding to a point where the surge occurs, in a 2D coordinate system of the rotational speed and pressure ratio of the compressor (100), and performs the surge avoidance logic so that the calculated operating point is moved out of the surge region.

12. The chiller system of any one of claims 1 to 11, further comprising a storage (170) for storing a compressor map including a surge line separating a surge region, in which the surge occurs, and a normal region,
wherein when the surge occurs, the controller (150) calculates an operating point, corresponding to a point where the surge occurs, in a 2D coordinate system of the rotational speed and pressure ratio of the compressor (110), and updates the compressor map based on the calculated operating point.

13. The chiller system of claim 12, wherein the controller (150) divides the surge line into a plurality of sections based on the rotational speed of the compressor (110),
Wherein, when the surge occurs, the controller (150) calculates an operating point, corresponding to a point where the surge occurs, in a 2D coordinate system of the rotational speed and pressure ratio of the compressor (110), and updates a section including the operating point among the plurality of sections.

14. The chiller system of claim 13, wherein the controller (150) calculates a pressure ratio to be updated, by adding a correction value, set for a rotational speed section in which the surge occurs, to the pressure ratio at which the surge occurs.

**Patentansprüche**

1. Kühlersystem (10), aufweisend:

einen Verdichter (110), der konfiguriert ist, ein Kältemittel durch Rotation zu verdichten;
einen Verflüssiger (120), der konfiguriert ist, das vom Verdichter (110) verdichtete Kältemittel zu verflüssigen;
einen Expander (130), der konfiguriert ist, das verflüssigte Kältemittel zu expandieren;
einen Verdampfer (140), der konfiguriert ist, das expandierte Kältemittel zu verdampfen;
eine Sensoreinheit (160), die eine Vielzahl von Temperatursensoren, einen Drehzahlsensor zum Erkennen einer Drehgeschwindigkeit des Verdichters (110) und einen Stromsensor zum Erkennen eines Stroms des Verdichters (110) aufweist; und

einen Controller (150), der konfiguriert ist, zu bestimmen, ob er basierend auf einer von der Sensoreinheit (160) erkannten Volatilität von Daten in eine Überspannungsdetektionslogik eintreten soll, und konfiguriert ist, eine Überspannungsdetektion durchzuführen,

wobei als Reaktion darauf, dass eine Drehzahlvolatilität und eine Stromvolatilität des Verdichters (110) und eine Volatilität von einem oder mehr Temperaturwerten, die von der Vielzahl von Temperatursensoren erkannt werden, innerhalb von Referenzspannen liegen, die für die jeweiligen Werte festgelegt sind, der Controller (150) in die Überspannungsdetektionslogik eintritt.

2. Kühlersystem nach Anspruch 1, wobei, wenn die Überspannung auftritt, der Controller (150) eine Überspannungsvermeidungslogik durchführt, um eine Strömungsmenge des in den Verdichter (110) strömenden Kältemittels oder die Drehzahl des Verdichters (110) zu verändern.

3. Kühlersystem nach Anspruch 1 oder 2, wobei der Controller (150) konfiguriert ist, um:

das Auftreten einer Überspannung mithilfe einer vortrainierten künstlichen Intelligenz (KI) basierend auf maschinellem Lernen zu prognostizieren und zu detektieren;
beim Prognostizieren oder Detektieren des Auftretens einer Überspannung die Überspannungsvermeidungslogik durchzuführen; und
basierend auf einer Druckverhältnisvolatilität und der Stromvolatilität des Verdichters (110) zu bestimmen, ob die Überspannungsvermeidungslogik beendet werden soll.

4. Kühlersystem nach einem der Ansprüche 1 bis 3, wobei der Controller (150) aufweist:

eine Einrichtung zum Festlegen einer Überspannungsdetektionslogikeintrittsbedingung (410), die konfiguriert ist, Einflussgrößen auszuwählen, die für Überspannungsdetektionslogikeintrittsbedingungen benötigt werden;
einen Überspannungsdetektionsprozessor (420), der konfiguriert ist, eine Einflussgröße zu extrahieren, die sich für ein Überspannungsprognose- und Detektionsmodell eignet, und eine künstliche Intelligenz (AI) aufweist, die mithilfe der extrahierten Einflussgröße trainiert wird;
einen Überspannungsvermeidungscontroller (430), der konfiguriert ist, bei Detektieren der Überspannung eine Überspannungsvermeidungsoperation durchzuführen;
eine Einheit zum Eintreten in einen Normalzustand (440), die konfiguriert ist, zu bestimmen, ob nach der Erholung von der Überspannung die Überspannungsvermeidungsoperation beendet wird;
eine Einheit zum Ausgeben einer Fehlermeldung (450), die konfiguriert ist, entsprechend des Auftretens der Überspannung eine Fehlermeldung auszugeben.

5. Kühlersystem nach einem der Ansprüche 1 bis 4, ferner aufweisend ein Einlasssteuerventil (1800), das konfiguriert ist, die Strömungsmenge des in den Verdichter (110) strömenden Kältemittels zu steuern,
wobei bei Detektieren der Überspannung als Reaktion darauf, dass eine Solltemperatur an einem Kühlwasserauslass größer ist als eine aktuelle Temperatur an dem Kühlwasserauslass, der Controller (150) das Einlasssteuerventil (1800) auf 100 % einstellt, und als Reaktion darauf, dass die Solltemperatur an dem Kühlwasserauslass niedriger ist als die aktuelle Temperatur an dem Kühlwasserauslass, der Controller (150) das Einlasssteuerventil (1800) fixiert und die Drehzahl des Verdichters (110) erhöht.

6. Kühlersystem nach Anspruch 5, wobei, wenn der Abschluss der Überspannungsvermeidungsoperation während eines vorgegebenen Zeitraums fehlschlägt, der Controller (150) das Einlasssteuerventil fixiert und den Verdichter (110) stoppt.

7. Kühlersystem nach Anspruch 6, ferner aufweisend ein
Heißgasumgehungs(HGBP)-Ventil zum Umleiten eines Kältemittels hoher Temperatur und hohen Drucks, das aus dem Verdichter (110) ausgeleitet wird, zu einer Einlassseite des Verdichters (110),
wobei der Controller (150) bei einer Überspannung das HGBP-Ventil betätigt.

8. Kühlersystem nach einem der Ansprüche 5 bis 7, ferner aufweisend eine Ejektionseinrichtung (1700), die konfiguriert ist, ein gemischtes Kältemittel, das ein Gemisch aus einem Teil des aus dem Verdichter (110) ausgeleiteten Kältemittels und einem Teil des aus dem Verdampfer (140) ausgeleiteten Kältemittels enthält, auszuleiten, und die einen ersten Einlass (1710), durch den ein Teil des aus dem Verdichter (110) ausgeleiteten Kältemittels eingeleitet wird, sowie einen zweiten Einlass (1729), durch den ein Teil des aus dem Verdampfer (140) ausgeleiteten Kältemittels eingeleitet wird, aufweist,

wobei das Einlasssteuerventil (1800) in einem Rohr angeordnet ist, das mit dem ersten Einlass (1710) verbunden ist und eine Strömungsmenge des in den ersten Einlass (1710) strömenden Kältemittels steuert.

9. Kühlersystem nach einem der Ansprüche 5 bis 8, wobei:

als Reaktion darauf, dass die Druckverhältnisvolatilität und Stromvolatilität des Verdichters (110) innerhalb einer vorgegebenen Spanne liegen, der Controller (150) in einen flexiblen Betrieb zum schrittweisen Erhöhen der Umdrehungen des Verdichters (110) eintritt; und
als Reaktion darauf, dass die Druckverhältnisvolatilität und Stromvolatilität des Verdichters (110) nicht innerhalb einer vorgegebenen Spanne liegen, der Controller (150) das Einlasssteuerventil (1800) fixiert und den Verdichter (110) stoppt.

10. Kühlersystem nach einem der Ansprüche 1 bis 9, wobei als Reaktion darauf, dass die Drehzahlvolatilität und die Stromvolatilität des Verdichters (110) und die Volatilität der Temperaturwerte, die von der Vielzahl von Temperatursensoren erkannt wurden, nicht innerhalb der Referenzspannen liegen, die für die jeweiligen Werte festgelegt sind, bis eine vorgegebene Zeitspanne verstreicht, der Controller (150) in die Überspannungssteuerungslogik eintritt.

11. Kühlersystem nach einem der Ansprüche 1 bis 10, ferner aufweisend einen Speicher (170) zum Speichern eines Verdichterkennfelds, das eine Überspannungslinie beinhaltet, die einen Überspannungsbereich, in dem die Überspannung auftritt, und einen Normalbereich abtrennt;
wobei, wenn die Überspannung auftritt, der Controller (150) in einem 2D-Koordinatensystem aus Drehzahl und Druckverhältnis des Verdichters (100) einen Betriebspunkt berechnet, der einem Punkt entspricht, an dem die Überspannung auftritt, und die Überspannungsvermeidungslogik derart durchführt, dass der berechnete Betriebspunkt aus dem Überspannungsbereich hinausbewegt wird.

12. Kühlersystem nach einem der Ansprüche 1 bis 11, ferner aufweisend einen Speicher (170) zum Speichern eines Verdichterkennfelds mit einer Überspannungslinie, die einen Überspannungsbereich, in dem die Überspannung auftritt, und einen Normalbereich abtrennt,
wobei, wenn die Überspannung auftritt, der Controller (150) in einem 2D-Koordinatensystem aus Drehzahl und Druckverhältnis des Verdichters (110) einen Betriebspunkt berechnet, der einem Punkt entspricht, an dem die Überspannung auftritt, und basierend auf dem berechneten Betriebspunkt das Verdichterkennfeld aktualisiert.

13. Kühlersystem nach Anspruch 12, wobei der Controller (150) die Überspannungslinie basierend auf der Drehzahl des Verdichters (110) in eine Vielzahl von Abschnitten unterteilt,
wobei, wenn die Überspannung auftritt, der Controller (150) in einem 2D-Koordinatensystem aus Drehzahl und Druckverhältnis des Verdichters (110) einen Betriebspunkt berechnet, der einem Punkt entspricht, an dem die Überspannung auftritt, und unter der Vielzahl von Abschnitten einen Abschnitt aktualisiert, der den Betriebspunkt beinhaltet.

14. Kühlersystem nach Anspruch 13, wobei der Controller (150) ein zu aktualisierendes Druckverhältnis durch Addieren eines Korrekturwerts, der für einen Drehzahlabschnitt festgelegt wird, in dem die Überspannung auftritt, zu dem Druckverhältnis, bei dem die Überspannung auftritt, berechnet.

**Revendications**

1. Système de refroidisseur (10) comprenant :

un compresseur (110) configuré pour comprimer un réfrigérant par rotation ;
un condenseur (120) configuré pour condenser le réfrigérant comprimé par le compresseur (110) ;
un détendeur (130) configuré pour détendre le réfrigérant condensé ;
un évaporateur (140) configuré pour évaporer le réfrigérant détendu ;
une unité de capteurs (160) incluant une pluralité de capteurs de température, un capteur de vitesse pour détecter une vitesse de rotation du compresseur (110), et un capteur de courant pour détecter un courant du compresseur (110) ; et
un contrôleur (150) configuré pour déterminer s'il faut entrer dans une logique de détection de surtension sur la base d'une volatilité de données détectées par l'unité de capteurs (160), et configuré pour effectuer une détection de surtension,

dans lequel en réponse à une volatilité de la vitesse de rotation et une volatilité du courant du compresseur (110) et une volatilité d'une ou plusieurs valeurs de température détectées par la pluralité de capteurs de température tombant dans des plages de référence définies pour les valeurs respectives, le contrôleur (150) entre dans la logique de détection de surtension.

2. Système de refroidisseur selon la revendication 1, dans lequel, lorsque la surtension se produit, le contrôleur (150) effectue une logique d'évitement de surtension pour changer une quantité de débit du réfrigérant, s'écoulant dans le compresseur (110), ou la vitesse de rotation du compresseur (110).

3. Système de refroidisseur de la revendication 1 ou 2, dans lequel le contrôleur (150) est configuré pour :

prédire et détecter l'occurrence d'une surtension en utilisant une intelligence artificielle (IA) pré-éduquée basée sur l'apprentissage automatique ;
lors de la prédiction ou de la détection de l'occurrence d'une surtension, effectuer la logique d'évitement de surtension ; et
sur la base de la volatilité du rapport de pression et de la volatilité du courant du compresseur (110), déterminer s'il faut terminer la logique d'évitement de surtension.

4. Système de refroidisseur selon l'une quelconque des revendications 1 à 3, dans lequel le contrôleur (150) comprend :

un dispositif de définition de conditions d'entrée de logique de détection de surtension (410) configuré pour sélectionner des facteurs requis pour des conditions d'entrée de logique de détection de surtension ;
un processeur de détection de surtension (420) configuré pour extraire un facteur approprié pour un modèle de prédiction et de détection de surtension et incluant une intelligence artificielle (IA) éduquée en utilisant le facteur extrait ;
un contrôleur d'évitement de surtension (430) configuré pour effectuer une opération d'évitement de surtension lors de la détection de la surtension ;
une unité d'entrée d'état normal (440) configurée pour déterminer s'il faut terminer l'opération d'évitement de surtension après récupération de la surtension ; et
une unité de sortie de message d'erreur (450) configurée pour sortir un message d'erreur correspondant à l'occurrence de surtension.

5. Système de refroidisseur selon l'une quelconque des revendications 1 à 4, comprenant en outre une soupape de commande d'entrée (1800) configurée pour commander la quantité de débit du réfrigérant s'écoulant dans le compresseur (110),
dans lequel, lors de la détection de la surtension, en réponse au fait qu'une température cible au niveau d'une sortie d'eau froide est supérieure à une température actuelle au niveau de la sortie d'eau froide, le contrôleur (150) ajuste la soupape de commande d'entrée (1800) à 100 %, et en réponse au fait que la température cible au niveau de la sortie d'eau froide est inférieure à la température actuelle au niveau de la sortie d'eau froide, le contrôleur (150) fixe la soupape de commande d'entrée (1800) et augmente la vitesse de rotation du compresseur (110).

6. Système de refroidisseur selon la revendication 5, dans lequel, en cas d'échec de l'opération d'évitement de surtension pendant une période de temps prédéterminée, le contrôleur (150) fixe la soupape de commande d'entrée et arrête le compresseur (110).

7. Système de refroidisseur selon la revendication 6, comprenant en outre une soupape de dérivation de gaz chauds (HGBP) pour dériver un réfrigérant à haute température et haute pression, déchargé du compresseur (110), vers un côté d'entrée du compresseur (110),
dans lequel lors de la surtension, le contrôleur (150) actionne la soupape HGBP.

8. Système de refroidisseur selon l'une quelconque des revendications 5 à 7, comprenant en outre un éjecteur (1700) configuré pour décharger un réfrigérant mixte contenant un mélange d'une partie du réfrigérant déchargé du compresseur (110) et d'une partie du réfrigérant déchargé de l'évaporateur (140), et incluant une première entrée (1710), par laquelle une partie du réfrigérant déchargé du compresseur (110) est introduite, et une deuxième entrée (1729), par laquelle une partie du réfrigérant déchargé de l'évaporateur (140) est introduite,
dans lequel la soupape de commande d'entrée (1800) est disposée dans un tuyau connecté à la première entrée (1710) et commande une quantité de débit du réfrigérant s'écoulant dans la première entrée (1710).

**9.** Système de refroidisseur selon l'une quelconque des revendications 5 à 8, dans lequel :

en réponse au fait que la volatilité du rapport de pression et la volatilité du courant du compresseur (110) se trouvent dans une plage prédéterminée, le contrôleur (150) entre dans une opération flexible pour augmenter progressivement les révolutions du compresseur (110) ; et
en réponse au fait que la volatilité du rapport de pression et la volatilité du courant du compresseur (110) ne se trouvent pas dans la plage prédéterminée, le contrôleur (150) fixe la soupape de commande d'entrée (1800) et arrête le compresseur (110).

**10.** Système de refroidisseur selon l'une quelconque des revendications 1 à 9, dans lequel, en réponse au fait que la volatilité de la vitesse de rotation et la volatilité du courant du compresseur (110) et la volatilité des valeurs de température détectées par la pluralité de capteurs de température ne tombent pas dans les plages de référence définies pour les valeurs respectives jusqu'à ce qu'une période de temps prédéterminée s'écoule, le contrôleur (150) entre dans la logique de contrôle de surtension.

**11.** Système de refroidisseur selon l'une quelconque des revendications 1 à 10, comprenant en outre une mémoire (170) pour stocker une carte de compresseur incluant une ligne de surtension séparant une région de surtension, dans laquelle la surtension se produit, et une région normale,
dans lequel, lorsque la surtension se produit, le contrôleur (150) calcule un point de fonctionnement, correspondant à un point où la surtension se produit, dans un système de coordonnées 2D de la vitesse de rotation et du rapport de pression du compresseur (100), et effectue la logique d'évitement de surtension de telle sorte que le point de fonctionnement calculé est déplacé hors de la région de surtension.

**12.** Système de refroidisseur selon l'une quelconque des revendications 1 à 11, comprenant en outre un stockage (170) pour stocker une carte de compresseur incluant une ligne de surtension séparant une région de surtension, dans laquelle la surtension se produit, et une région normale,
dans lequel lorsque la surtension se produit, le contrôleur (150) calcule un point de fonctionnement, correspondant à un point où la surtension se produit, dans un système de coordonnées 2D de la vitesse de rotation et du rapport de pression du compresseur (110), et met à jour la carte de compresseur sur la base du point de fonctionnement calculé.

**13.** Système de refroidisseur selon la revendication 12, dans lequel le contrôleur (150) divise la ligne de surtension en une pluralité de sections sur la base de la vitesse de rotation du compresseur (110),
dans lequel, lorsque la surtension se produit, le contrôleur (150) calcule un point de fonctionnement, correspondant à un point où la surtension se produit, dans un système de coordonnées 2D de la vitesse de rotation et du rapport de pression du compresseur (110), et met à jour une section incluant le point de fonctionnement parmi la pluralité de sections.

**14.** Système de refroidisseur selon la revendication 13, dans lequel le contrôleur (150) calcule un rapport de pression à mettre à jour, en ajoutant une valeur de correction, définie pour une section de vitesse de rotation dans laquelle la surtension se produit, au rapport de pression auquel la surtension se produit.

# FIG. 1

**FIG. 2**

**FIG. 3**

**FIG. 4**

400

| 410 SURGE DETECTION LOGIC ENTRY CONDITION SETTER | 440 NORMAL STATE ENTRY UNIT |
|---|---|
| 420 SURGE DETECTION PROCESSOR | 450 MESSAGE OUTPUT UNIT |
| 430 SURGE AVOIDANCE CONTROLLER | 460 COMPRESSOR MAP UPDATER |

**FIG. 5**

30

220 COMMUNICATOR ⟷ 210 PROCESSOR ⟷ 230 MEMORY

## FIG. 6

```
                    ┌──────────┐
                    │  START   │
                    └────┬─────┘
                         │          S610
                    ╱────┴────╲
                  ╱   IT IS     ╲     NO
                 ╱ DETERMINED    ╲──────────┐
                ╱ TO ENTER INTO   ╲         │
                ╲ SURGE DETECTION ╱         │
                 ╲    LOGIC?     ╱          │
                  ╲─────┬───────╱           │
                        │ YES               │
                        │        S620       │
                ┌───────┴────────┐          │
                │ PERFORM SURGE  │          │
                │ DETECTION LOGIC│          │
                └───────┬────────┘          │
                        │        S630       │
                   ╱────┴────╲              │
                  ╱ IS SURGE   ╲    NO       │
                 ╱  DETECTED?   ╲───────────┤
                  ╲────┬───────╱            │
                       │ YES                │
                       │         S640       │
                ┌──────┴─────────┐          │
                │ UPDATE         │          │
                │ COMPRESSOR MAP │          │
                └──────┬─────────┘          │
                       │                    │
                ┌──────┴─────────┐          │
                │ PERFORM SURGE  │  S650     │
                │ AVOIDANCE      │          │
                │ OPERATION      │          │
                └──────┬─────────┘          │
                       │         S660       │
                  ╱────┴────╲               │
                 ╱ IS SURGE   ╲    NO         │
                ╱ AVOIDANCE    ╲─────────────┘
                ╲ OPERATION    ╱
                 ╲TERMINATED? ╱
                  ╲────┬─────╱
                       │ YES
                  ┌────┴─────┐
                  │   END    │
                  └──────────┘
```

## FIG. 7

(a)

(b)

| RANKING OF FACTORS | NAME OF FACTORS | F1 SCORE |
|---|---|---|
| 1 | CURRENT | 241.94 |
| 2 | COOL WATER INLET TEMPERATURE | 181.57 |
| 3 | PCB TEMPERATURE | 2.50 |
| 4 | MOTOR BEARING TEMPERATURE SENSOR | 1.93 |
| 5 | EVAPORATION PRESSURE | 1.81 |
| 6 | VFD | 1.12 |
| 7 | PRESSURE RATIO | 0.11 |
| 8 | COOL WATER OUTLET TEMPERATURE | 0.04 |
| 9 | HOT GAS VALVE | 0.02 |
| 10 | CONDENSATION PRESSURE | 0.01 |

## FIG. 8

```
                    ┌──────────┐
                    │  START   │
                    └────┬─────┘
                         │                   S810
          ┌──────────────▼──────────────┐
          │  START OPERATION ACCORDING   │
          │      TO INITIAL SETTING      │
          └──────────────┬──────────────┘
                         │
                        ( )◄────────────────────────┐
                         │                           │
                         │              S820         │
                    ◇────▼────◇  NO                  │
                   / OPERATING \─────────────────────┤
                   \ TIME ≤     /                     │
                    \ 20 MINUTES?                     │
                    ◇────┬────◇                       │
                         │ YES                        │
                         │             S830           │
                    ◇────▼────◇  NO                   │
                   /  IS COOL   \──────────────────►  │
                   \ WATER OUTLET/                    │
                    \ TEMPERATURE                     │
                     \ STABLE? /                      │
                    ◇────┬────◇                       │
                         │ YES                        │
                         │             S840           │
                    ◇────▼────◇  NO                   │
                   /  IS COOL   \──────────────────►  │
                   \ WATER INLET /                    │
                    \ TEMPERATURE                     │
                     \ STABLE? /                      │
                    ◇────┬────◇                       │
                         │ YES                        │
                         │             S850           │
                    ◇────▼────◇  NO                   │
                   / IS ROTATIONAL\─────────────────► │
                   \ SPEED STABLE?/                   │
                    ◇────┬────◇                       │
                         │ YES                        │
                         │             S860           │
                    ◇────▼────◇  NO                   │
                   / IS CURRENT  \────────────────────┤
                   \  STABLE?    /                     │
                    ◇────┬────◇                        │
                         │ YES         S870            │
          ┌──────────────▼──────────────┐             │
          │   PERFORM SURGE CONTROL      │◄────────────┘
          │          LOGIC               │
          └──────────────┬──────────────┘
                         │
                    ┌────▼─────┐
                    │   END    │
                    └──────────┘
```

## FIG. 9

(a)

(b)

(c)

(d)

**FIG. 10**

**FIG. 11**

## FIG. 12

(a)

(b)

(d)

(c)

**FIG. 13**

# FIG. 14

(a)

Timer [sec]

Data

——— Timer_Detect Surge     ----- Timer_Avoid Surge

(b)

Temperature [°C]

Data

——— Temp. CoolWater Out

(c)

DGR[%]

Data

——— DGR[%]

(d)

VFD[Hz]

Data

----- Inverter[Hz]     ——— Safe[Hz]

# FIG. 15

**FIG. 16**

## FIG. 17

## FIG. 18

1700

**EP 3 985 332 B1**

**REFERENCES CITED IN THE DESCRIPTION**

**Patent documents cited in the description**

- KR 101084477
- US 4581900 A
- US 5971712 A